# EUROPEAN PATENT SPECIFICATION

(11) **EP 4 432 639 B1**
(45) Date of publication and mention of the grant of the patent: **11.02.2026**
(21) Application number: 23821111.4
(22) Date of filing: 15.12.2023
(51) Int. Cl.: H04M 1/72454, G06F 3/0481, G06F 3/04817, G06F 3/0482, G06F 3/0488, G06F 3/04886, H04M 1/02, H04M 1/68

(54) **ELECTRONIC DEVICE COMPRISING PLURALITY OF DISPLAYS, AND CONTROL METHOD THEREOF**
ELEKTRONISCHE VORRICHTUNG MIT MEHREREN ANZEIGEN UND STEUERUNGSVERFAHREN DAFÜR
DISPOSITIF ÉLECTRONIQUE COMPRENANT UNE PLURALITÉ D'AFFICHEURS, ET SON PROCÉDÉ DE COMMANDE

(30) Priority: 19.12.2022 KR 20220178306; 19.01.2023 KR 20230007893
(43) Date of publication of application: 18.09.2024
(73) Proprietor: Samsung Electronics Co., Ltd., Suwon-si, Gyeonggi-do 16677 (KR)
(72) Inventor: LEE, Younsun, Suwon-si, Gyeonggi-do 16677 (KR); KIM, Sangheon, Suwon-si, Gyeonggi-do 16677 (KR); LIM, Yeunwook, Suwon-si, Gyeonggi-do 16677 (KR); KIM, Juyoung, Suwon-si, Gyeonggi-do 16677 (KR); KIM, Changhwan, Suwon-si, Gyeonggi-do 16677 (KR); MOON, Hyunjung, Suwon-si, Gyeonggi-do 16677 (KR); BAE, Sungchan, Suwon-si, Gyeonggi-do 16677 (KR)
(74) Representative: HGF
(86) International application number: PCT/KR2023/020794
(87) International publication number: WO 2024/136340

(56) References cited:
- KR-A- 20200 064 792
- KR-A- 20210 045 187
- KR-A- 20220 017 203
- KR-A- 20220 017 244
- US-A1- 2020 174 646
- US-A1- 2020 249 898
- US-A1- 2021 365 278
- US-A1- 2022 044 655

## Description

### [Technical Field]

Embodiments of the disclosure relate to an electronic device including a plurality of displays and a method for controlling the same.

### [Background Art]

More and more services and additional functions are being provided through electronic devices, e.g., smartphones, or other portable electronic devices. To meet the needs of various users and raise use efficiency of electronic devices, communication service carriers or device manufacturers are jumping into competitions to develop electronic devices with differentiated and diversified functionalities. Accordingly, various functions that are provided through electronic devices are evolving more and more.

Electronic devices may be subjected to various states (e.g., folding or sliding) according to the user's control while displaying the execution screen of an application. In other words, their housings, and associated displays, may be arrangeable in a number of different states or configurations. In a case where the state of at least one housing of the electronic device is changed according to the user's control, such as folding or sliding, areas on the display having different sizes and aspect ratios are mainly used by the user. In particular, due to a change in the state (or configuration) of at least one housing of the electronic device, the area on the display that is smaller in size than before the change is mainly used by the user. Thus, a change in configuration of the housing may result in a smaller display area being available to a user. US2022044655A1 describes a flexible electronic device that uses sensors to monitor the degree of bending. It adjusts the user interface dynamically based on the bending state, which can include repositioning, scaling and hiding certain UI elements.

### [Disclosure of Invention]

### [Solution to Problems]

Certain embodiments aim to address the technical problem of how to provide continuity of use of an application when a configuration of the electronic device is changed (e.g. when one housing portion is moved relative to another housing portion), resulting in a change in the display usable by a user (e.g. a change in the position, location, identity, and/or size of the usable display). In other words, certain embodiments address the problem of providing continuity of use of an application in response to a change of display configuration, which may have resulted from a change in a housing configuration and/or position (for example, a change involving at least one of folding, sliding, rolling, or moving one housing portion relative to another, and/or changing an orientation of a housing portion).

The invention is defined by the independent claims.

According to an embodiment, an electronic device comprises a first display, a second display, and at least one processor operatively connected to the first display and the second display. The at least one processor is configured to: based on activation of the second display within a preset (or set, predetermined, programmed, or threshold) time after receiving a user input through a first user interface (UI) capable of executing at least one function of an application, displayed on the first display, identify whether a second UI capable of executing at least one function of the application is disposed on (e.g. is activated on, or selectable for viewing on, but may not be currently displayed on) the second display; based on the second UI being disposed on the second display, display the second UI on the second display; and based on the second UI not being disposed on the second display, generate the second UI corresponding to the first UI based on a size of the second display and display the second UI on the second display.

The electronic device may comprise at least one housing, and the first display may be coupled to, mounted on or in, and/or be visually exposed through (or in, or on) a first portion of the at least one housing. The second display may be coupled to, mounted on or in, and/or be visually exposed through (or in, or on) a second portion of the at least one housing. The second portion of the housing may be opposite to the first portion of the housing in at least one configuration of the device. For example, the first and second housing portions may be hinged together, foldable with respect to each other, slidable with respect to each other, and/or at least one of the housing portions may be rollable. The device may further comprise at least one sensor and a memory, and the processor may be operatively connected to the at least one sensor and the memory.

According to an embodiment, an electronic device may comprise at least one housing, at least one sensor, a memory, a first display visually exposed through a first portion of the at least one housing, a second display visually exposed through a second portion of the housing opposite to the first portion of the at least one housing, and at least one processor operatively connected to the at least one sensor, the memory, the first display and the second display.

According to an embodiment, the at least one processor may, based on activation of the second display within a preset time after receiving a user input through a first user interface (UI) capable of executing at least one function of an application, displayed on the first display, identify whether a second UI capable of executing at least one function of the application is disposed on the second display.

According to an embodiment, the at least one processor may display the second UI on the second display based on the second UI being disposed (on the second display).

According to an embodiment, the at least one processor may generate the second UI corresponding to the first UI based on a size of the second display based on the second UI being not disposed (on the second display).

According to an embodiment, the at least one processor may display the second UI on the second display.

According to an embodiment, a method for controlling an electronic device comprises: based on activation of a second display within a preset (or set, predetermined, programmed, or threshold) time after receiving a user input through a first user interface (UI) capable of executing at least one function of an application, displayed on a first display (e.g. a first display visually exposed through, on, or in a first portion of at least one housing), identifying whether a second UI capable of executing at least one function of the application is disposed on (e.g. is activated on, or selectable for viewing on, but may not be currently displayed on) the second display (e.g. a second display visually exposed through, on, or in a second portion of the at least one housing, opposite to a first portion of the at least one housing in at least one configuration of the device); based on the second UI being disposed on the second display, displaying the second UI on the second display; and based on the second UI being not being disposed on the second display, generating the second UI corresponding to the first UI based on a size of the second display, and displaying the second UI on the second display.

According to an embodiment, a method for controlling an electronic device may comprise based on activation of a second display within a preset time after receiving a user input through a first user interface (UI) capable of executing at least one function of an application, displayed on a first display visually exposed through a first portion of at least one housing, identifying whether a second UI capable of executing at least one function of the application is disposed on a second display visually exposed through the second portion of the at least one housing, opposite to a first portion of the at least one housing.

According to an embodiment, the method for controlling the electronic device may comprise displaying the second UI on the second display.

According to an embodiment, the displaying of the second UI may comprise displaying the second UI on the second display based on the second UI being disposed.

According to an embodiment, the displaying of the second UI comprising may comprise generating the second UI corresponding to the first UI based on a size of the second display, based on the second UI being not disposed.

According to an embodiment, a non-transitory computer-readable recording medium stores one or more programs, the one or more programs comprising instructions that enable an electronic device to: based on activation of a second display within a preset (or set, predetermined, programmed, or threshold) time after receiving a user input through a first user interface (UI) capable of executing at least one function of an application, displayed on a first display, identify whether a second UI capable of executing at least one function of the application is disposed on (e.g. is activated on, or selectable for viewing on, but may not be currently displayed on) the second display; based on the second UI being disposed on the second display, displaying the second UI on the second display; and based on the second UI being not being disposed on the second display, generating the second UI corresponding to the first UI based on a size of the second display, and displaying the second UI on the second display. The first display may be visually exposed through, on, or in a first portion of at least one housing, and the second display may be visually exposed through, on, or in a second portion of the at least one housing, for example opposite to the first portion of the at least one housing in at least one configuration of the device.

According to an embodiment, in a non-transitory computer-readable recording medium storing one or more programs, the one or more programs may comprise instructions that enable an electronic device to, based on activation of the second display within a preset time after receiving a user input through a first user interface (UI) capable of executing at least one function of an application, displayed on a first display visually exposed through a first portion of at least one housing, identify whether a second UI capable of executing at least one function of an application is disposed on a second display visually exposed through a second portion of the at least one housing opposite to the first portion of the at least one housing.

According to an embodiment, the one or more programs may comprise instructions that enable the electronic device to display the second UI on the second display based on the second UI being disposed.

According to an embodiment, the one or more programs may comprise instructions that enable the electronic device to generate the second UI corresponding to the first UI based on a size of the second display based on the second UI being not disposed.

According to an embodiment, the one or more programs may comprise instructions that enable the electronic device to display the second UI on the second display.

### [Brief Description of Drawings]

FIG. 1 is a block diagram illustrating an electronic device in a network environment according to an embodiment;
FIG. 2 is a view illustrating an unfolded state of a foldable electronic device according to an embodiment of the disclosure;
FIG. 3 is a view illustrating a folded state of a foldable electronic device according to an embodiment of the disclosure;
FIG. 4A is an example view illustrating an unfolded state of an electronic device (e.g., the electronic device 101 of FIG. 1) according to an embodiment of the disclosure;
FIG., 4B is an example view illustrating a folded state of the electronic device of FIG. 4A;
FIG. 5A is a view illustrating a state in which a second display area of a display is received in a housing according to an embodiment;
FIG. 5B is a view illustrating a state in which a second display area of a display is exposed to the outside of a housing according to an embodiment;
FIG. 6 illustrates at least one housing of an electronic device according to an embodiment;
FIG. 7 is a flowchart illustrating an operation of displaying a second UI corresponding to a first user interface displayed on a first display of an electronic device on a second display according to an embodiment;
FIG. 8 is a flowchart illustrating an operation of displaying a second UI of an electronic device on a second display depending on the size of the second display and/or whether the second UI is disposed on the second display according to an embodiment;
FIG. 9A is a view illustrating an operation of an electronic device according to in-folding of the electronic device when a second UI is disposed on a second display according to an embodiment;
FIG. 9B is a view illustrating an operation of an electronic device according to in-folding of the electronic device when a second UI is not disposed on a second display according to an embodiment;
FIG. 9C is a view illustrating an operation of an electronic device according to out-folding of the electronic device when a second UI is not disposed on a second display according to an embodiment;
FIG. 9D is a view illustrating an operation of an electronic device according to in-folding of the electronic device when a second display is smaller according to an embodiment;
FIG. 9E is a view illustrating an operation of an electronic device according to in-folding of the electronic device when the electronic device includes two or more hinges according to an embodiment;
FIG. 9F is a view illustrating an operation of an electronic device according to extension of the electronic device when the electronic device is a rollable electronic device according to an embodiment;
FIG. 10A is a view illustrating an operation of selecting a widget based on the size of a second display of an electronic device according to an embodiment;
FIG. 10B is a view illustrating an operation of extending a widget based on the size of a second display of an electronic device according to an embodiment;
FIG. 10C is a view illustrating an operation of cropping a widget based on the size of a second display of an electronic device according to an embodiment;
FIG. 10D is a view illustrating an operation of selecting a widget based on the size of a second display of an electronic device according to an embodiment;
FIG. 11A is a view illustrating an operation of displaying a second UI corresponding to a first UI in a state in which a UI is disposed on a second display of an electronic device according to an embodiment;
FIG. 11B is a view illustrating a stack structure of UIs when a second UI corresponding to a first UI is displayed in a state in which a UI is disposed on a second display of an electronic device according to an embodiment;
FIG. 12 is a view illustrating an operation when a second display is activated after a plurality of UIs are used on a first display of an electronic device according to an embodiment;
FIG. 13A is a view illustrating an operation of using a plurality of UIs on a first display of an electronic device according to an embodiment;
FIG. 13B is a view illustrating a stack structure of UIs displayed on a second display of an electronic device according to an embodiment;
FIG. 13C is a view illustrating an operation of displaying a UI on a second display of an electronic device according to the UI stack structure of FIG. 13B;
FIG. 14A is a view illustrating an operation according to a user input received after a second UI is displayed on a second display of an electronic device according to an embodiment;
FIG. 14B is a view illustrating an operation according to a user input received after a second UI is displayed on a second display of an electronic device according to an embodiment;
FIG. 15A is a view illustrating an operation when a first display is activated after a second UI is displayed on a second display of an electronic device according to an embodiment;
FIG. 15B is a view illustrating an operation when a first display is activated after a second UI is displayed on a second display of an electronic device according to an embodiment;
FIG. 16 is a view illustrating an operation of displaying a second UI on a second display when in-folded in a state in which an execution screen is displayed through a first display of an electronic device according to an embodiment;
FIG. 17A is a view illustrating an operation of displaying an uppermost area of a first UI displayed on a first display of an electronic device, as a second UI corresponding to the first UI, on a second display according to an embodiment;
FIG. 17B is a view illustrating an operation of displaying an area where a user input is received, of a first UI displayed on a first display of an electronic device, as a second UI corresponding to the first UI, on a second display according to an embodiment;
FIG. 18 is a view illustrating a second UI displayed on a second display that varies as a user input is received through a first UI displayed on a first display of an electronic device according to an embodiment;
FIG. 19A is a view illustrating an operation when a second display is activated in a state in which an execution screen of a function capable of generating a widget is displayed through a first display of an electronic device according to an embodiment;
FIG. 19B is a view illustrating an operation when a second display is activated in a state in which an execution screen of a function capable of generating a widget is displayed through a first display of an electronic device according to an embodiment;
FIG. 20 is a view illustrating an operation of displaying a message for leading to installation of a second UI when the second UI is generated and displayed a set number of times or more in a state in which the second UI is not disposed on a second display of an electronic device according to an embodiment; and
FIG. 21 is a view illustrating an operation of displaying a second UI corresponding to a first UI on a second display when the second display is activated while the first UI displayed through a portion of a first display of an electronic device is used, according to an embodiment.

### [Mode for the Invention]

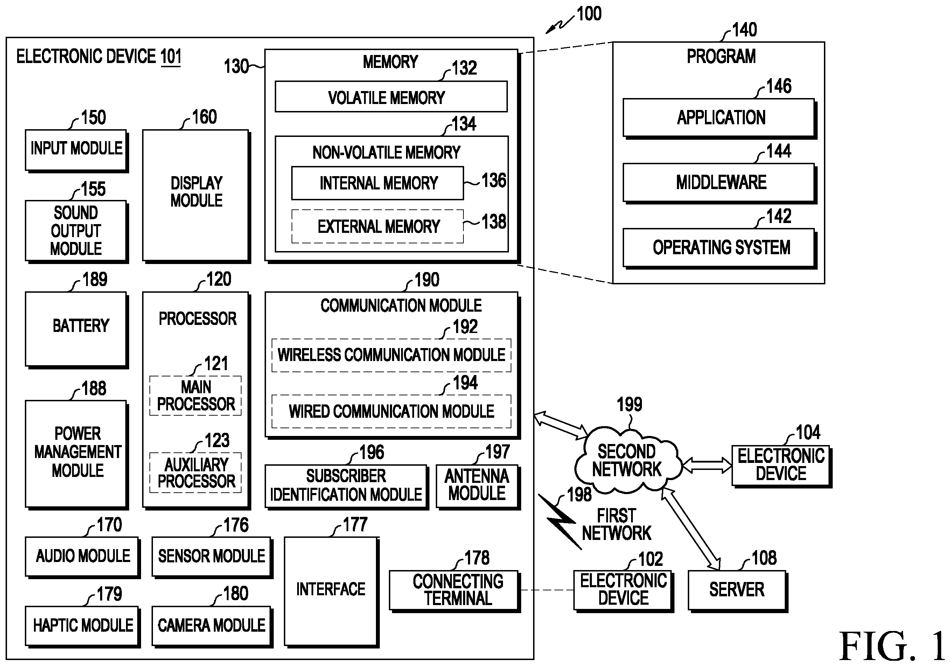

FIG. 1 is a block diagram illustrating an electronic device 101 in a network environment 100 according to an embodiment. Referring to FIG. 1, the electronic device 101 in the network environment 100 may communicate with at least one of an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display 160 may include, for example, a display, a hologram device, or a projector and control circuitry to control a corresponding one of the display, hologram device, and projector. According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth^{™} wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductive body or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to an embodiment, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or health-care) based on 5G communication technology or IoT-related technology.

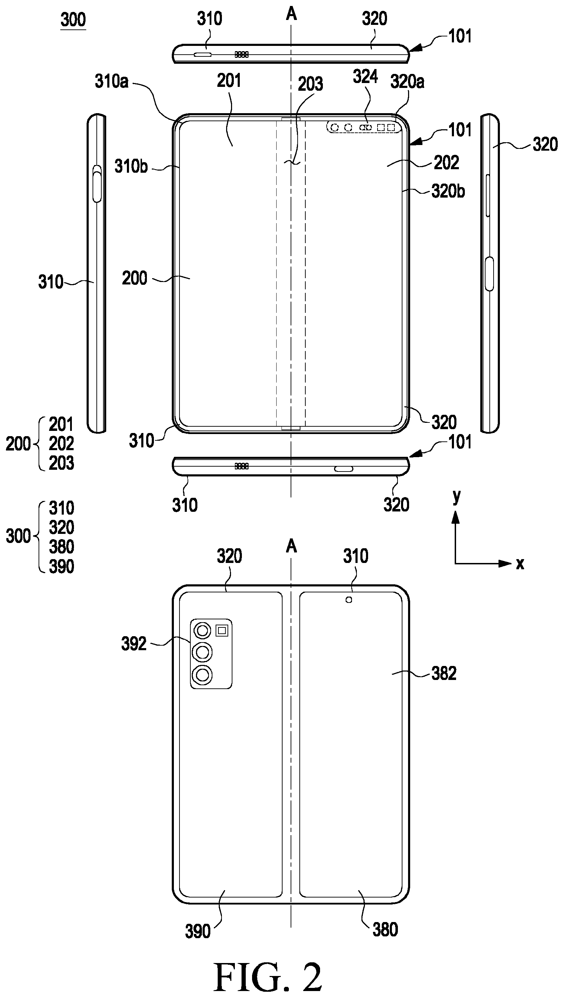

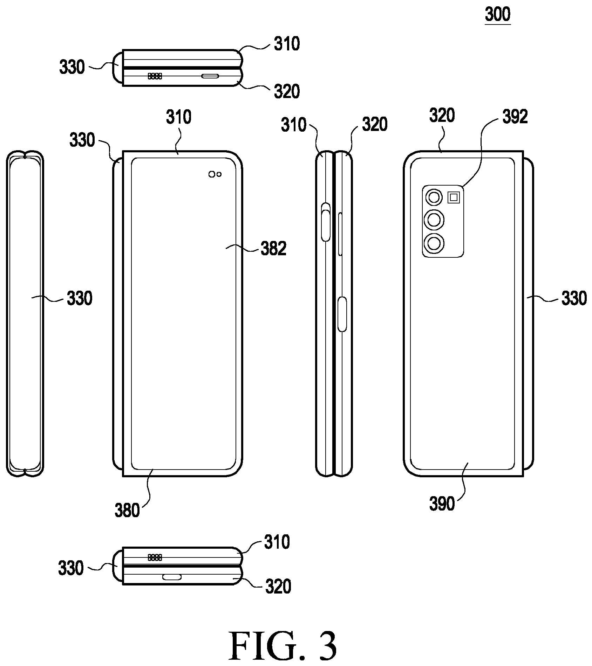

FIG. 2 is a view illustrating an unfolded state among folding states of a foldable electronic device according to an embodiment of the disclosure. FIG. 3 is a view illustrating a folded state among folding states of a foldable electronic device according to an embodiment of the disclosure.

Referring to FIGS. 2 and 3, according to an embodiment, a foldable electronic device (hereinafter, an electronic device 101) may include a foldable housing 300, a hinge case (e.g., the hinge case 330 of FIG. 3) (e.g., a hinge cover) covering a foldable portion of the foldable housing 300, and a flexible or foldable display 200 (hereinafter, simply "display 200") (e.g., the display device 160 of FIG. 1) disposed in a space formed by the foldable housing 300. According to an embodiment, the surface on which the display 200 is disposed is defined as a front surface of the electronic device 101. The opposite surface of the front surface is defined as a rear surface of the electronic device 101. Further, the surface surrounding the space between the front and rear surfaces is defined as a side surface of the electronic device 101.

According to an embodiment, the foldable housing 300 may include a first housing structure 310, a second housing structure 320 including a sensor area 324, a first rear cover 380, and a second rear cover 390. The foldable housing 300 of the electronic device 101 are not limited to the shape and coupling shown in FIGS. 2 and 3 but may rather be implemented in other shapes or via a combination and/or coupling of other components. For example, the first housing structure 310 and the first rear cover 380 may be integrally formed with each other, and the second housing structure 320 and the second rear cover 390 may be integrally formed with each other.

According to an embodiment, the first housing structure 310 may be connected to the hinge structure and may include a first surface facing in a first direction and a second surface facing in a second direction opposite to the first direction. The second housing structure 320 may be connected to the hinge structure and may include a third surface facing in a third direction and a fourth surface facing in a fourth direction opposite to the third direction, and may rotate from the first housing structure 310 on the hinge structure. Thus, the electronic device 101 may turn into a folded state or unfolded state. In the folded state of the electronic device 101, the first surface may face the third surface and, in the unfolded state, the third direction may be identical to the first direction.

According to an embodiment, the first housing structure 310 and the second housing structure 320 may be disposed on both sides of the folding axis A, and may have an overall symmetrical shape with respect to the folding axis A. As is described below, the angle or distance between the first housing structure 310 and the second housing structure 320 may be varied depending on whether the electronic device 101 is in the unfolded state, the folded state, or the partially unfolded intermediate state. According to an embodiment, the second housing structure 320 further includes the sensor area 324 where various sensors are disposed, unlike the first housing structure 310 but, in the remaining area, the second housing structure 320 may be symmetrical in shape with the first housing structure 310.

According to an embodiment, as shown in FIG. 2, the first housing structure 310 and the second housing structure 320 together may form a recess to receive the display 200. In an embodiment, due to the sensor area 324, the recess may have two or more different widths in the direction perpendicular to the folding axis A.

According to an embodiment, the recess may have a first width between a first portion 310a of the first housing structure 310, which is parallel with the folding axis A, and a first portion 320a of the second housing structure 320, which is formed at an edge of the sensor area 324. The recess may have a second width formed by a second portion 310b of the first housing structure 310 and a second portion 320b of the second housing structure 320, which does not correspond to the sensor area 324 and is parallel with the folding axis A. In this case, the second width may be longer than the first width. As another example, the first portion 310a of the first housing structure 310 and the first portion 320a of the second housing structure 320, which are asymmetrical with each other, may form the first width of the recess, and the second portion 310b of the first housing structure 310 and the second portion 320b of the second housing structure 320, which are symmetrical with each other, may form the second width of the recess. In an embodiment, the first portion 320a and second portion 320b of the second housing structure 320 may have different distances from the folding axis A. The width of the recess is not limited thereto. According to another embodiment, the recess may have a plurality of widths due to the shape of the sensor area 324 or the asymmetric portions of the first housing structure 310 and the second housing structure 320.

According to an embodiment, at least a portion of the first housing structure 310 and the second housing structure 320 may be formed of a metal or a non-metal material having a predetermined degree of rigidity to support the display 200. At least a portion formed of metal may provide a ground plane of the electronic device 101 and may be electrically connected with a ground line formed on the printed circuit board.

According to an embodiment, the sensor area 324 may be formed adjacent to a corner of the second housing 320 and to have a predetermined area. However, the placement, shape, or size of the sensor area 324 is not limited to those illustrated. For example, in another embodiment, the sensor area 324 may be provided in a different corner of the second housing structure 320 or in any area between the top corner and the bottom corner. In an embodiment, components for performing various functions, embedded in the electronic device 101, may be visually exposed through the sensor area 324 or one or more openings in the sensor area 324 to the front surface of the electronic device 101. In an embodiment, the components may include various kinds of sensors. The sensor may include, e.g., at least one of a front camera, a receiver, or a proximity sensor.

According to an embodiment, the first rear cover 380 may be disposed on one side of the folding axis A on the rear surface of the electronic device 101 and have, e.g., a substantially rectangular periphery which may be surrounded by the first housing structure 310. Similarly, the second back cover 390 may be disposed on the opposite side of the folding axis on the back surface of the electronic device 101 and its periphery may be surrounded by the second housing structure 320.

According to an embodiment, the first rear cover 380 and the second rear cover 390 may be substantially symmetrical in shape with respect to the folding axis (axis A). However, the first rear cover 380 and the second rear cover 390 are not necessarily symmetrical in shape. In another embodiment, the electronic device 101 may include the first rear cover 380 and the second rear cover 390 in various shapes. According to another embodiment, the first rear cover 380 may be integrally formed with the first housing structure 310, and the second rear cover 390 may be integrally formed with the second housing structure 320.

In an embodiment, the first rear cover 380, the second rear cover 390, the first housing structure 310, and the second housing structure 320 may form a space where various components (e.g., a printed circuit board or battery) of the electronic device 101 may be disposed. According to an embodiment, one or more components may be arranged or visually exposed on/through the rear surface of the electronic device 101. For example, at least a portion of a sub display may be visually exposed through a first rear surface area 382 of the first rear cover 380. In another embodiment, one or more components or sensors may be visually exposed through a second rear surface area 392 of the second rear cover 390. In an embodiment, the sensor may include a proximity sensor and/or a rear camera.

According to an embodiment, a front camera visually exposed to the front surface of the electronic device 101 through one or more openings prepared in the sensor area 324 or a rear camera exposed through a second rear surface area 392 of the second rear cover 390 may include one or more lenses, an image sensor, and/or an image signal processor. The flash may include, e.g., a light emitting diode (LED) or a xenon lamp. In an embodiment, two or more lenses (an infrared (IR) camera, a wide-angle lens, and a telephoto lens) and image sensors may be disposed on one surface of the electronic device 101.

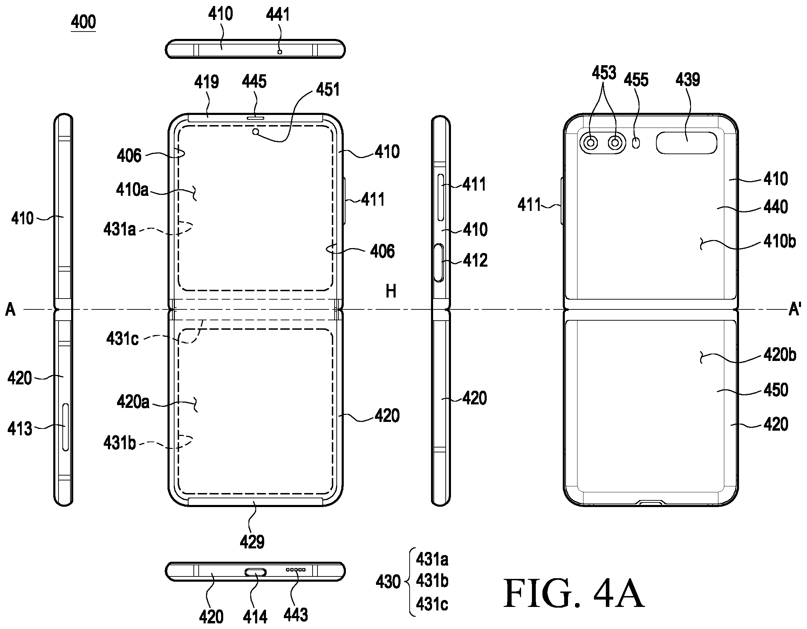

FIG. 4A is an example view illustrating an unfolded state of a foldable-type electronic device 400 according to an embodiment of the disclosure.

Referring to FIG. 4A, according to an embodiment of the disclosure, an electronic device 400 may be a foldable type which is foldable or unfoldable (in other words, when in a folded state it may be unfolded to an unfolded state, and when in an unfolded state it may be foldable to a folded state) and may include a first housing 410, a second housing 420, and a flexible or foldable display 430 (hereinafter, simply referred to as a "display 430") (e.g., the display module 160 of FIG. 1) disposed in a space provided by the first housing 410 and the second housing 420.

According to an embodiment of the disclosure, the surface on which the display 430 is disposed may be defined as a front surface of the electronic device 400. At least a portion of the front surface of the foldable device 400 may have a substantially transparent front plate (e.g., a glass plate or polymer plate including various coat layers). The opposite surface to the front surface may be defined as a rear surface of the foldable device 400. The rear of the foldable device 400 may be formed by a substantially opaque rear plate (hereinafter, referred to as a 'rear cover'). The rear cover may be formed of, e.g., laminated or colored glass, ceramic, polymer, metal (e.g., aluminum, stainless steel (STS), or magnesium), or a combination of at least two thereof. The surface surrounding the space between the front and back surfaces may be defined as a side surface of the foldable device 400. The side surface may be formed by a side bezel structure (or a "side member") that couples to the front plate and the rear plate and includes a metal and/or polymer. According to an embodiment, the rear cover and the side bezel plate may be integrally formed together and include the same material (e.g., a metal, such as aluminum).

According to an embodiment of the disclosure, the foldable device 400 may include at least one or more of a display 430, a microphone hole 441, speaker holes 443 and 445, a sensor module 455, a camera module 453, key input devices 411, 412, and 413, and a connector hole 414. According to an embodiment, the foldable device 400 may omit at least one (e.g., the key input devices 411, 412, 413) of the components or additionally include another component (e.g., a light emitting device).

According to an embodiment of the disclosure, the display 430 may be a display having at least a partial area transformable to be flat or curved. According to an embodiment, the display 430 may include a folding area 431c, a first area 431a disposed on one side of the folding area 431 (e.g., an upper side of the folding area 431c of FIG. 4A), and a second area 431b disposed on the opposite side of the folding area 431c (e.g., a lower side of the folding area 431c of FIG. 4A). However, the segmentation of the display 430 as shown in FIG. 4A is merely an example, and the display 430 may be divided into a plurality of (e.g., four or more, or two) areas depending on the structure or function of the display 200. For example, in the embodiment illustrated in FIG. 4A, the display 430 may be divided into the areas by the folding area 431c or folding axis A but, in another embodiment, the display 430 may be divided into the areas with respect to another folding area 431c or another folding axis (e.g., a folding axis perpendicular to the folding axis A).

According to an embodiment of the disclosure, the microphone hole 441 may have a microphone inside to obtain external sounds. According to an embodiment, there may be a plurality of microphones to be able to detect the direction of a sound. The speaker holes 443 and 445 may include an external speaker hole 443 and a phone receiver hole 445. According to an embodiment, the speaker holes 443 and 445 and the microphone hole 441 may be implemented as a single hole, or speakers may be rested without the speaker holes 443 and 445 (e.g., piezo speakers). Various changes may be made to the position and number of microphone holes 441 and speaker holes 443 and 445 according to an embodiment.

According to an embodiment of the disclosure, the camera module 453 may include a first camera device 451 disposed on a first surface 410a of the first housing 410 of the foldable device 400 and a second camera device 453 disposed on a second surface 410b. Further, the foldable device 400 may further include a flash (not shown). The camera devices 451 and 453 may include one or more lenses, an image sensor, and/or an image signal processor. The flash (not shown) may include, e.g., a light emitting diode (LED) or a xenon lamp.

According to an embodiment of the disclosure, the sensor module 455 may generate an electrical signal or data value corresponding to an internal operating state or external environmental state of the foldable device 400. Although not shown in the drawings, the foldable device 400 may additionally or alternatively include a sensor module (e.g., the sensor module 176 of FIG. 1) other than the sensor module 455 provided on the second surface 410b of the first housing 410. According to an embodiment of the disclosure, the foldable device 400 may further include at least one of a proximity sensor, a fingerprint sensor, an HRM sensor, a gesture sensor, a gyro sensor, an atmospheric pressure sensor, a magnetic sensor, an acceleration sensor, a grip sensor, a color sensor, an infrared (IR) sensor, a biometric sensor, a temperature sensor, a humidity sensor, an angle sensor, or an illuminance sensor, as the sensor module. According to an embodiment of the disclosure, in a folded state of the foldable device 400, the foldable device 400 may distinguish the upper surface and the lower surface of the foldable device using data obtained by the gyro sensor. For example, according to an embodiment of the disclosure, if the data obtained by the gyro sensor is substantially changed from data at a specific time, the foldable device 400 may determine that the surface where the gyro sensor is provided is the upper surface. In contrast, according to an embodiment of the disclosure, if the data obtained by the gyro sensor is not substantially changed from the data at the specific time, the foldable device 400 may determine that the surface where the gyro sensor is provided is the lower surface. According to an embodiment of the disclosure, the foldable device 400 may determine the folding angle of the foldable device 400 through an angle sensor disposed around the folding axis A. However, according to an embodiment of the disclosure, various techniques for determining the folding angle of the foldable device 400 may be applied to embodiments of the disclosure.

According to an embodiment of the disclosure, the key input devices 411, 412, and 413 may be disposed on a side surface of the foldable housing (e.g., the first housing 410 or the second housing 420). According to another embodiment, the electronic device 400 may exclude all or some of the above-mentioned key input devices 411, 412, and 413 and the excluded key input devices may be implemented in other forms, e.g., as soft keys, on the display 430. In an embodiment, the key input device may be configured to implement key input by a sensor module (e.g., a gesture sensor).

According to an embodiment of the disclosure, the connector hole 414 may be configured to receive a connector (e.g., a USB connector) for transmitting/receiving power and/or data to/from an external electronic device or, additionally or alternatively, a connector for transmitting/receiving audio signals to/from an external electronic device.

According to an embodiment of the disclosure, a foldable housing may be implemented by a combination of the first housing 410, the second housing 420, the first rear cover 440, the second rear cover 450, and the hinge module. According to an embodiment of the disclosure, the foldable housing of the foldable device 400 is not limited to the shape and coupling shown in FIG. 4A but may rather be implemented in other shapes or via a combination and/or coupling of other components. For example, in another embodiment, the first housing 410 and the first rear cover 440 may be integrally formed with each other, and the second housing 420 and the second rear cover 450 may be integrally formed with each other. According to an embodiment of the disclosure, 'housing' may mean a combination of other various components not mentioned and/or a combined configuration thereof. For example, it may be described that a first area 413a of the display 430 forms one surface of the first housing 410 and, in another embodiment, the first area 413a of the display 430 is disposed or attached to one surface of the first housing 410.

According to an embodiment of the disclosure, the first housing 410 may be connected to a hinge structure and may include a first surface 410a facing in a first direction and a second surface 410b facing in a second direction opposite to the first direction. The second housing 420 may be connected to the hinge structure and may include a third surface 420a facing in a third direction and a fourth surface 420b facing in a fourth direction opposite to the third direction and may be rotated or pivoted from the first housing 410 around the hinge structure (or folding axis A).

According to an embodiment of the disclosure, the first housing 410 and the second housing 420 may be disposed on two opposite sides (or upper/lower sides) of the folding axis A and may overall have a symmetrical shape with respect to the folding axis A. The angle or distance between the first housing 410 and the second housing 420 may be varied depending on whether the electronic device 400 is in the unfolded state, the folded state, or the partially unfolded (or partially folded) intermediate state. According to an embodiment, the first housing 410 may further include various sensors unlike the second housing 420 but, in the remaining area, the first housing 210 and the second housing 220 may have symmetrical shapes with each other.

According to an embodiment of the disclosure, the first housing 410 and the second housing 420 may at least partially be formed of a metal or non-metallic material with a rigidity selected to support the display 430. The at least a portion formed of the metal material may be provided as a ground plane or radiating conductor of the foldable device 400 and, if provided as the ground plane, it may be electrically connected with a ground line formed on the printed circuit board.

According to an embodiment of the disclosure, the first rear cover 440 may be disposed on one side (e.g., the upper side in FIG. 4A) of the folding axis A, on the rear surface of the foldable device 400, e.g., it may have a substantially rectangular periphery which may be surrounded by the first housing 410 (and/or the side bezel structure). Similarly, the second rear cover 450 may be disposed on the opposite side (e.g., the lower side in FIG. 4A) of the folding axis A on the rear surface of the foldable device 400 and its periphery may be surrounded by the second housing 420 (and/or the side bezel structure).

According to an embodiment of the disclosure, the first rear cover 440 and the second rear cover 450 may be substantially symmetrical in shape with respect to the folding axis A. However, the first rear cover 440 and the second rear cover 450 are not necessarily symmetrical in shape. In another embodiment, the foldable device 400 may include the first rear cover 440 and the second rear cover 450 in various shapes. In another embodiment, the first rear cover 440 may be integrally formed with the first housing 410, and the second rear cover 450 may be integrally formed with the second housing 420.

According to an embodiment of the disclosure, the first rear cover 440, the second rear cover 450, the first housing 410, and the second housing 420 may form a space where various components of the foldable device 400 may be disposed. According to an embodiment, one or more components may be arranged or visually exposed on/through the rear surface of the foldable device 400. For example, at least a portion of a sub display 439 may be visually exposed through the first rear cover 440. In another embodiment, one or more components or sensors may be visually exposed through the first rear cover 440. According to an embodiment, the components or sensors may include a proximity sensor, a rear camera, and/or a flash. Although not separately shown in the drawings, one or more other components or sensors may be visually exposed through the second rear cover 450.

According to an embodiment of the disclosure, the front camera 451 exposed from the front surface of the foldable device 400 through one or more openings or the rear camera 453 exposed through the first rear cover 440 may include one or more lenses, an image sensor, and/or an image signal processor. The flash (not shown) may include, e.g., a light emitting diode (LED) or a xenon lamp. According to an embodiment, two or more lenses (an infrared (IR) camera, a wide-angle lens, and a telescopic lens) and image sensors may be disposed on one surface of the foldable device 400.

According to an embodiment of the disclosure, the foldable device 400 may transform to a folded state or an unfolded state.

For example, the first housing 410 and the second housing 420 may be pivoted about each other between a first position, in which they face each other, and a second position (e.g., the state shown in FIG. 4A) unfolded from the first position by a designated angle. FIG. 4A exemplifies an unfolded state of the first housing 410 and the second housing 420 which form about 180 degrees therebetween. In the folded state, e.g., the first position, the first area 431a and the second area 431b of the display 430 are positioned to face each other, and the folding area 431c may be deformed into a curved shape.

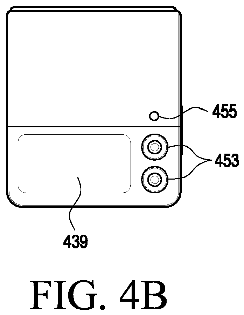

According to an embodiment of the disclosure, the foldable device 400 may be implemented as one (or both) of two types, 'in-folding' in which the first area 431a and the second area 431b are folded to face each other, and 'out-folding' in which the first area 431a and the second area 431b are folded toface in opposite directions. Thus, in certain embodiments, the foldable device 400 may be configurable in a "folded-in" state, in which the first and second areas 431a and 431b face each other, an "unfolded state", in which the first and second areas 431a and 431b face in the same direction, and a "folded-out" state, in which the first and second areas 431a and 431b face in opposite directions. For example, in the in-folding folded state, the first area 431a and the second area 431b may be substantially hidden and, in the fully unfolded state, the first area 431a and the second area 431b may be disposed to face substantially in the same direction. As another example, in the out-folding folded state, the first area 431a and the second area 431b are disposed to face in opposite directions, exposed to the outside and, in the fully unfolded state, the first area 431a and the second area 431b may be disposed to face substantially in the same direction. According to an embodiment, the folded state is described below with reference to FIG. 4B.

According to an embodiment of the disclosure, the display 430 may include a display panel and a window member and may be formed of a flexible material. Although not separately shown, it will be appreciated by one of ordinary skill in the art that the display 430 or display panel includes various layers, such as a light emitting layer, a substrate(s) for encapsulating the light emitting layer, an electrode or wiring layer, and/or adhesive layer(s) for bonding different layers. According to an embodiment of the disclosure, when the display 430 (e.g., the folding area 431c) is deformed into a flat or curved shape, a relative displacement may occur between the layers constituting the display 430. The relative displacement due to the deformation of the display 430 may increase as it is farther away from the folding axis A and/or as the thickness of the display 430 increases.

According to an embodiment of the disclosure, the window member may serve as a protection film for protecting the display panel. As a protection film, a thin film plate may be formed of a material that protects the display panel from external impact, is robust against scratches, and causes fewer creases in the folding area 431c when the housings 410 and 420 are repeatedly folded and unfolded. For example, the material of the thin film plate may include a clear polyimide (CPI) film or ultra-thin glass (UTG).

According to an embodiment, the foldable device 400 may further include a protection member(s) 406 or ornamental covers 419 and 429 disposed at at least a portion of the edge of the display 430 on the front surface (e.g., the front surface 410a or the third surface 420a). The protection member 406 or ornamental covers 419 and 429 may prevent at least a portion of the edge of the display 430 from contacting a mechanical structure (e.g., the first housing 410 or the second housing 420) and provide a decorative effect to the outer appearance of the foldable device 400.

FIG. 4B is an example view illustrating a folded state of the foldable device of FIG. 4A. For example, FIG. 4B illustrates an 'in-folding' folded state.

Referring to FIG. 4B, the electronic device (e.g., the electronic device 101 of FIG. 1 or the foldable device 400 of FIG. 4A) may change from the unfolded state as shown in FIG. 4A to the folded state.

According to an embodiment, in the 'in-folding' folded state of the electronic device, the first area (e.g., the first area 431a of FIG. 4A) and second area (e.g., the second area 431b of FIG. 4A) of the flexible display (e.g., the display module 160 of FIG. 1) are folded to face each other to be substantially hidden.

According to an embodiment, the first rear cover (e.g., the first rear cover 440 of FIG. 4A) and the second rear cover (e.g., the second rear cover 450 of FIG. 4A), which are disposed to face in the same direction in the unfolded state, are disposed to face in opposite directions to be exposed to the outside in the folded state.

According to an embodiment, in the folded state, one or more components may be disposed or visually exposed through the first rear cover (or the second rear cover). For example, in the folded state, at least a portion of the sub display 439, the sensor module 455 (e.g., a proximity sensor), the rear camera 453, and/or the flash may be visually exposed through the first rear cover (or second rear cover).

According to an embodiment, in the folded state, the electronic device may provide content through the sub display 439. For example, the content may include a standby screen or an application execution screen. For example, the standby screen may include notification information, such as date information, time information, battery charge amount information, and/or event occurrence.

According to an embodiment, the shape and/or size of the sub display 439, and the type, size, and/or arrangement of the sub display 439, sensor module 455, and/or rear camera 453 are not limited to those shown in FIGS. 4A and 4B.

According to an embodiment, the rear camera 453 may be oriented vertically unlike that shown in FIG. 4A, the size of the sub display 439 may have the vertical length longer than that shown in FIG. 4A, and the sensor module 455 may be disposed on the rear camera 453, rather than between the sub display 439 and the rear camera 453 unlike that shown in FIG. 4A.

According to an embodiment, the type, shape, size, and/or arrangement of the sub display 439, sensor module 455, and rear camera 453 in FIGS. 4A and 4B is merely an example, and embodiments of the disclosure are not limited thereto. For example, the sub display 439 is rectangular with curved corners in FIGS. 4A and 4B, but it may have a circular or square shape. According to an embodiment, in FIGS. 4A and 4B, the sub display 439 is shown to be disposed in a partial area of the first rear cover (or second rear cover), but may be disposed in the entire area of the first rear cover (or the second rear cover).

According to an embodiment, the type and/or number of at least one component visually exposed through the rear cover (e.g., the first rear cover or the second rear cover) is not limited to those shown in FIGS. 4B and 4B.

According to an embodiment, although FIGS. 4B and 4C illustrate that the electronic device is folded in the 'in-folding' type, it may also be folded in the 'out-folding' type. If the electronic device is folded in the 'out-folding' type, one of the first area (e.g., the first area 431a of FIG. 4A) and the second area (e.g., the second area 431b of FIG. 4A) of the externally exposed flexible display (e.g., the display module 160 of FIG. 1) may be the sub display 439.

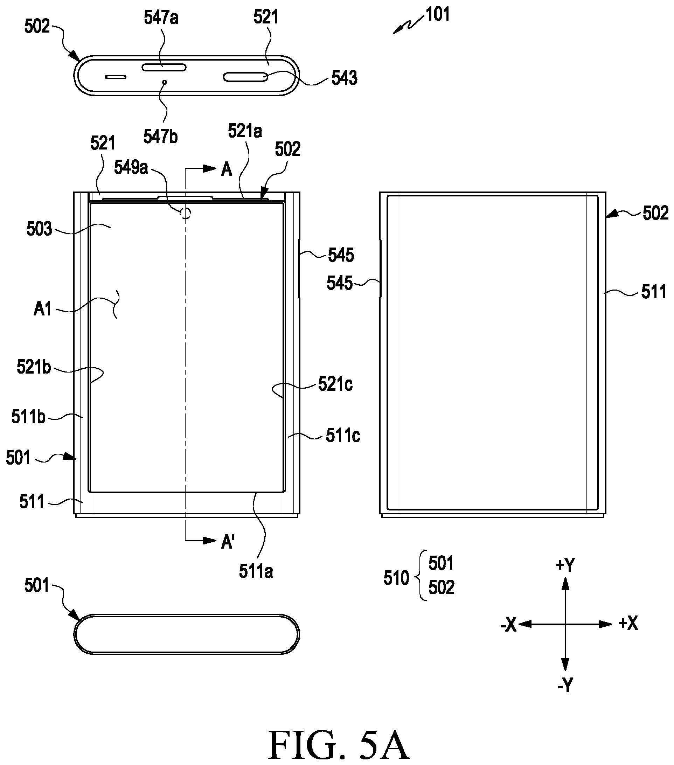

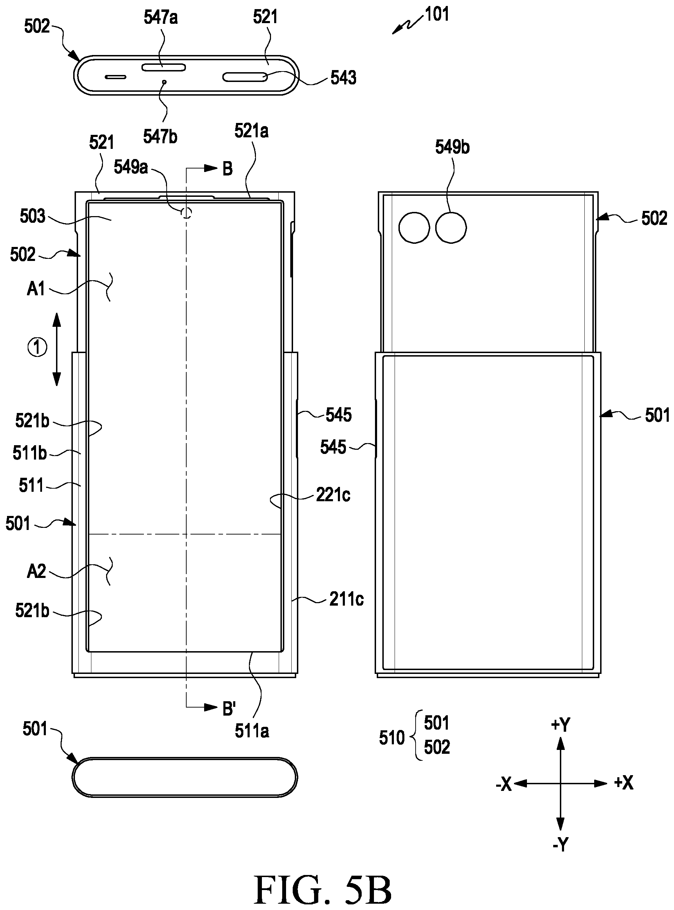

FIG. 5A is a view illustrating a state in which a second display area of a display is received in a housing according to an embodiment. FIG. 5B is a view illustrating a state in which a second display area of a display is exposed to the outside of a housing according to an embodiment.

FIGS. 5A and 5B illustrate a structure in which the display 503 (e.g., flexible display or rollable display) is extended in the length direction (e.g., +Y direction) when the electronic device 101 is viewed from the front. However, the extending direction of the display 503 is not limited to one direction (e.g., +Y direction). For example, the extending direction of the display 503 may be changed in design to be extendable in the upper direction (+Y direction), right direction (e.g., +X direction), left direction (e.g., -X direction), and/or lower direction (e.g., -Y direction).

The state shown in FIG. 5A may be referred to as a closed state of the electronic device 101 or housing 510 and a slide-in state of the display 503.

The state shown in FIG. 5B may be referred to as an opened state of the electronic device 101 or housing 510 and a slide-out state of the display 503.

Referring to FIGS. 5A and 5B, the electronic device 101 may include a housing 510. The housing 510 may include a first housing 501 and a second housing 502 disposed to be movable relative to the first housing 501. According to an embodiment, the electronic device 101 may be interpreted as having a structure in which the first housing 501 is disposed to be slidable with respect to the second housing 502. According to an embodiment, the second housing 502 may be disposed to perform reciprocating motion by a predetermined distance in a predetermined direction with respect to the first housing 501, for example, a direction indicated by an arrow ①.

According to an embodiment, the second housing 502 may be referred to as a slide portion or a slide housing, and may be movable relative to the first housing 501. According to an embodiment, the second housing 502 may receive various electrical/electronic components, such as a circuit board or a battery.

According to an embodiment, the first housing 502 may have, disposed therein, a motor, a speaker, a sim socket, and/or a sub circuit board electrically connected with a main circuit board. The second housing 501 may receive a main circuit board on which electric components, such as an application processor (AP) and a communication processor (CP) are mounted.

According to an embodiment, the first housing 501 may include a first cover member 511 (e.g., a main case). The first cover member 511 may include a 1-1th (or first) sidewall 511a, a 1-2th (or second) sidewall 511b extending from the 1-1th sidewall 511a, and a 1-3th (or third) sidewall 211c extending from the 1-1th sidewall 511a and substantially parallel to the 1-2th sidewall 511b. According to an embodiment, the 1-2th sidewall 511b and the 1-3th sidewall 511c may be formed substantially perpendicular to the 1-1th sidewall 511a.

According to an embodiment, the 1-1th sidewall 511a, 1-2th sidewall 511b, and 1-3th sidewall 511c of the first cover member 511 may be formed to have a side opening (e.g., front opening) to receive (or surround) at least a portion of the second housing 502. For example, at least a portion of the second housing 502 may be surrounded by the first housing 501 and be slid in the direction parallel to the first surface (e.g., the first surface F1 of FIG. 4), e.g., arrow ① direction, while being guided by the first housing 501. According to an embodiment, the 1-1th sidewall 511a, the 1-2th sidewall 511b, and/or the 1-3th sidewall 511c of the first cover member 511 may be integrally formed. According to an embodiment, the 1-1th sidewall 511a, the 1-2th sidewall 511b, and/or the 1-3th sidewall 511c of the first cover member 511 may be formed as separate structures and be combined or assembled.

According to an embodiment, the first cover member 511 may be formed to surround at least a portion of the display 503. For example, at least a portion of the display 503 may be formed to be surrounded by the 1-1th sidewall 511a, the 1-2th sidewall 511b, and/or the 1-3th sidewall 511c of the first cover member 511.

According to an embodiment, the second housing 502 may include a second cover member 521 (e.g., a slide plate). The second cover member 521 may have a plate shape and include a first surface (e.g., the first surface F1 of FIG. 4) supporting internal components. For example, the second cover member 521 may support at least a portion of the display 503 (e.g., the first display area A1). According to an embodiment, the second cover member 521 may be referred to as a front cover.

According to an embodiment, the second cover member 521 may include a 2-1th (or fourth) sidewall 521a, a 2-2th (or fifth) sidewall 521b extending from the 2-1th sidewall 521a, and a 2-3th (or sixth) sidewall 521c extending from the 2-1th sidewall 521a and substantially parallel to the 2-2th sidewall 521b. According to an embodiment, the 2-2th sidewall 521b and the 2-3th sidewall 521c may be formed substantially perpendicular to the 2-1th sidewall 521a.

According to an embodiment, as the second housing 502 moves in a first direction (e.g., direction ①) parallel to the 1-2th sidewall 511b or the 1-2th sidewall 511c, the housing 510 may form an opened state and a closed state. In the closed state, the second housing 502 may be positioned at a first distance from the 1-1th sidewall 511a and, in the opened state, the second housing 502 may be moved to be positioned at a second distance larger than the first distance from the 1-1th sidewall 511a. In some embodiments, in the closed state, the first housing 501 may surround a portion of the 2-1th side wall 521a.

According to an embodiment, the electronic device 101 may include a display 503, a key input device 545, a connector hole 543, audio modules 547a and 547b, or camera modules 549a and 549b. According to an embodiment, the electronic device 101 may further include an indicator (e.g., a light emitting diode (LED) device) or various sensor modules.

According to an embodiment, the display 503 may include a first display area A1 configured to remain exposed and a second display area A2 configured to be exposed to the outside of the electronic device 101 based on the slide of the second housing 502. According to an embodiment, the first display area A1 may be disposed on the second housing 502. For example, the first display area A1 may be disposed on the second cover member 521 of the second housing 502. According to an embodiment, the second display area A2 may extend from the first display area A1, and as the second housing 502 slides relative to the first housing 501, the second display area A2 may be received in the first housing 501 (e.g., the slide-in state) or be visually exposed to the outside of the electronic device 101 (e.g., the slide-out state).

According to an embodiment, the second display area A2 may be received in the space positioned inside the first housing 501 or exposed to the outside of the electronic device while being substantially guided by one area of the first housing 501. According to an embodiment, the second display area A2 may move based on a slide of the second housing 502 in the first direction (e.g., the direction indicated by the arrow ①). For example, while the second housing 502 slides, a portion of the second display area A2 may be deformed into a curved shape in a position corresponding to the curved surface of the first housing 501.

According to an embodiment, when viewed from above the second cover member 521 (e.g., front cover), if the electronic device 510 changes from the closed state to opened state (e.g., if the second housing 502 slides to extend from the first housing 501), the second display area A2 may be gradually exposed to the outside of the first housing 501 and, together with the first display area A1, form a substantially flat surface. According to an embodiment, the display 503 may be coupled with or disposed adjacent to a touch detection circuit, a pressure sensor capable of measuring the strength (pressure) of touches, and/or a digitizer for detecting a magnetic field-type stylus pen. According to an embodiment, irrespective of the closed state or opened state of the housing 510, the exposed portion of the second display area A2 may be positioned on a portion of the first housing, and a portion of the second display area A2 may remain in the curved shape in the position corresponding to the curved surface. It will be appreciated that in this, and other embodiments, the first display may be coupled to and/or mounted in or on a first housing or first housing portion, and the second display may be coupled to and/or mounted in or on a second housing or second housing portion.

According to an embodiment, the key input device 545 may be positioned in one area of the first housing 501. Depending on the appearance and the state of use, the electronic device 101 may be designed to omit the illustrated key input device 545 or to include additional key input device(s). According to an embodiment, the electronic device 101 may include a key input device (not shown), e.g., a home key button or a touchpad disposed around the home key button. According to an embodiment, at least a portion of the key input device 545 may be disposed on the 1-1th sidewall 511a, the 1-2th sidewall 511b, or the 1-3th sidewall 511c of the first housing 501.

According to an embodiment, the connector hole 543 may be omitted or may receive a connector (e.g., a universal serial bus (USB) connector) for transmitting and receiving power and/or data with an external electronic device. According to an embodiment (not shown), the electronic device 101 may include a plurality of connector holes 543, and some of the plurality of connector holes 543 may function as connector holes for transmitting/receiving audio signals with an external electronic device. In the illustrated embodiment, the connector hole 543 is disposed in the second housing 502, but is not limited thereto. For example, the connector hole 543 or a connector hole not shown may be disposed in the first housing 501.

According to an embodiment, the audio modules 547a and 547b may include at least one speaker hole 547a or at least one microphone hole 547b. One of the speaker holes 547a may be provided as a receiver hole for voice calls, and the other may be provided as an external speaker hole. The electronic device 101 may include a microphone for obtaining sound. The microphone may obtain external sound of the electronic device 101 through the microphone hole 547b. According to an embodiment, the electronic device 101 may include a plurality of microphones to detect the direction of sound. According to an embodiment, the electronic device 101 may include an audio module in which the speaker hole 547a and the microphone hole 547b are implemented as one hole or may include a speaker without the speaker hole 547a (e.g., a piezo speaker).

According to an embodiment, the camera modules 549a and 549b may include a first camera module 549a (e.g., a front camera) and a second camera module 549b (e.g., a rear camera) (e.g., the second camera module 549b of FIGS. 5A and 5B). According to an embodiment, the electronic device 101 may include at least one of a wide-angle camera, a telephoto camera, or a close-up camera. According to an embodiment, the electronic device 101 may measure the distance to the subject by including an infrared projector and/or an infrared receiver. The camera modules 549a and 549b may include one or more lenses, an image sensor, and/or an image signal processor. The first camera module 549a may be disposed to face in the same direction as the display 503. For example, the first camera module 549a may be disposed in an area around the first display area A1 or overlapping the display 503. When disposed in the area overlapping the display 503, the first camera module 549a may capture the subject through the display 503. According to an embodiment, the first camera module 549a may include an under display camera (UDC) that has a screen display area (e.g., the first display area A1) that may not be visually exposed but hidden. According to an embodiment, the second camera module 549b may capture the subject in a direction opposite to the first display area A1. According to an embodiment, the first camera module 549a and/or the second camera module 549b may be disposed on the second housing 502.

According to an embodiment, an indicator (not shown) of the electronic device 101 may be disposed on the first housing 501 or the second housing 502, and the indicator may include a light emitting diode to provide state information about the electronic device 101 as a visual signal. The sensor module (not shown) of the electronic device 101 may produce an electrical signal or data value corresponding to the internal operation state or external environment state of the electronic device. The sensor module may include, for example, a proximity sensor, a fingerprint sensor, or a biometric sensor (e.g., an iris/face recognition sensor or a heartrate monitor (HRM) sensor). According to another embodiment, the sensor module may further include, e.g., at least one of a gesture sensor, a gyro sensor, an atmospheric pressure sensor, a magnetic sensor, an acceleration sensor, a grip sensor, a color sensor, an infrared (IR) sensor, a temperature sensor, a humidity sensor, or an illuminance sensor.

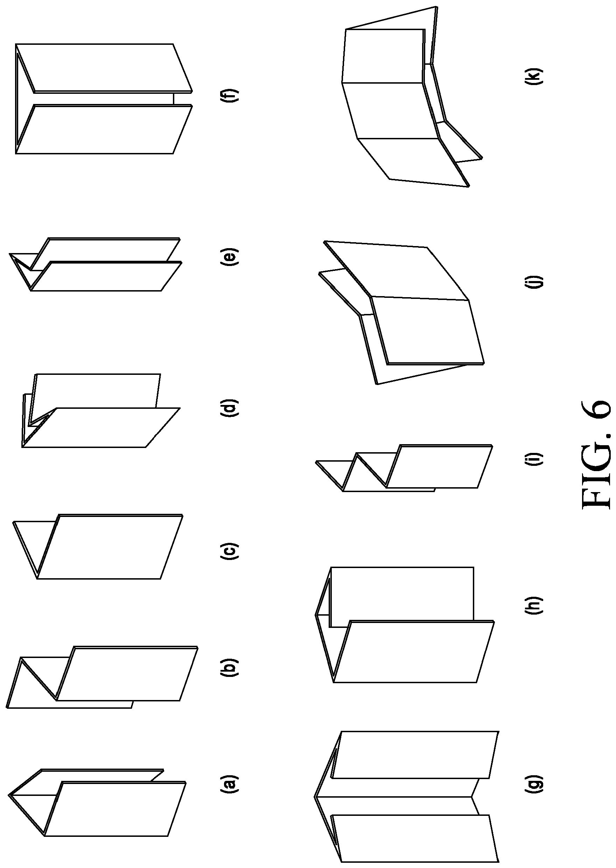

FIG. 6 is a view illustrating various examples of an electronic device including at least two or more housing structures and a flexible display according to an embodiment.

According to an embodiment, an electronic device may include two or more housing structures rotatably connected with each other and a flexible display.

According to an embodiment, the flexible display may be disposed on two or more housing structures and may be bent according to the rotational state of the housing structures. The rotational state of the housing structures is described below in more detail.

According to an embodiment, the electronic device may be formed in various forms according to two or more housing structures and a flexible display provided in the electronic device and a rotational state of the housing structures. For example, as illustrated in FIG. 2, the various forms include a form (half fold) in which two areas are formed in the electronic device (e.g., a flexible display), a form (e.g., tri fold, z fold, or single open gate fold) in which three areas are formed in the electronic device (e.g., a flexible display), a form (e.g., double parallel reverse fold, double parallel fold, double gate fold, roll fold, accordion fold, half fold then half fold) in which four areas are formed in the electronic device (e.g., a flexible display), and a fold (e.g., half fold then tri fold) in which more areas are formed in the electronic device (e.g., flexible display). The electronic device may include housing structures rotatably connected with each other and a flexible display. The housing structures may be rotated into a corresponding form.

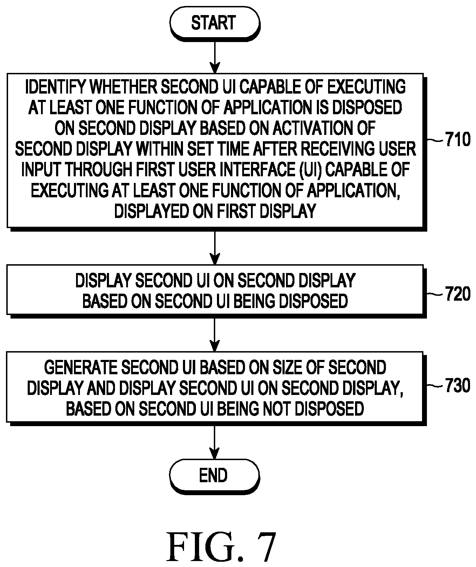

FIG. 7 is a flowchart illustrating an operation of displaying a second UI corresponding to a first user interface displayed on a first display of an electronic device on a second display according to an embodiment.

Referring to FIG. 7, in operation 710, an electronic device (e.g., the electronic device 101 of FIG. 1, the processor 120 of FIG. 1, the electronic device 101 of FIG. 2, the electronic device 400 of FIG. 4A, the electronic device 101 of FIG. 5A, or the electronic device 101 of FIG. 5B) may identify whether a second UI capable of executing at least one function of an application based on activation of the second display (e.g., the display module 160 of FIG. 1, the display 200 of FIG. 2, the display 430 of FIG. 4A, the rear display 439 of FIG. 4A, the rear display 439 of FIG. 4B, the display 503 of FIG. 5A, and the display 503 of FIG. 5B) within a set time after receiving a user input through a first user interface (UI) capable of executing at least one function of an application, displayed on a first display (e.g., the display module 160 of FIG. 1, the display 200 of FIG. 2, the display 430 of FIG. 4A, the rear display 439 of FIG. 4A, the rear display 439 of FIG. 4B, the display 503 of FIG. 5A, or the display 503 of FIG. 5B).

For example, the electronic device may display a first home screen associated with the first display(e.g., the flexible display) via the first display. According to an embodiment, the first home screen is configured to display a first user interface (UI) capable of executing at least one function of an application

According to an embodiment, the electronic device may receive a user input through the first UI displayed via the first display. According to an embodiment, the electronic device may activate the second display(e.g., the cover display) after receiving the user input.

According to an embodiment, the identifying the second UI is disposed on the second display may identifying whether a second home screen associated with the second display is configured to display a second UI capable of executing at least one function of the application

According to an embodiment, at least one of the first UI or the second UI may be a widget displayed on the first home screen of the first display or the second home screen of the second display. According to an embodiment, at least one of the first UI or the second UI may be the execution screen of the application displayed on the first display or the second display.

According to an embodiment, in operation 720, the electronic device may display the second UI on the second display based on the placement of the second UI. For example, the electronic device may display the second UI on the second home screen associated with the cover display, based on the second home screen associated with the second display being configured to display the second UI.

According to an embodiment, when the second UI is disposed on the second display, the electronic device may display a page on which the second UI is disposed (or viewable, or visible) among a plurality of pages of the home screen of the second display. In other words, when the second UI is "disposed on" the second display, this means that the second UI is already selectable for displaying on the second display, for example as one of a plurality of pages, although it may not be the page currently being displayed on the second display. For example, when the second UI is disposed on the second display, if the second display is activated within a preset time after receiving a user input through the first UI through the first display, the electronic device may display the page on which the second UI is disposed (or viewable, or visible) regardless of the page last displayed on the second display.

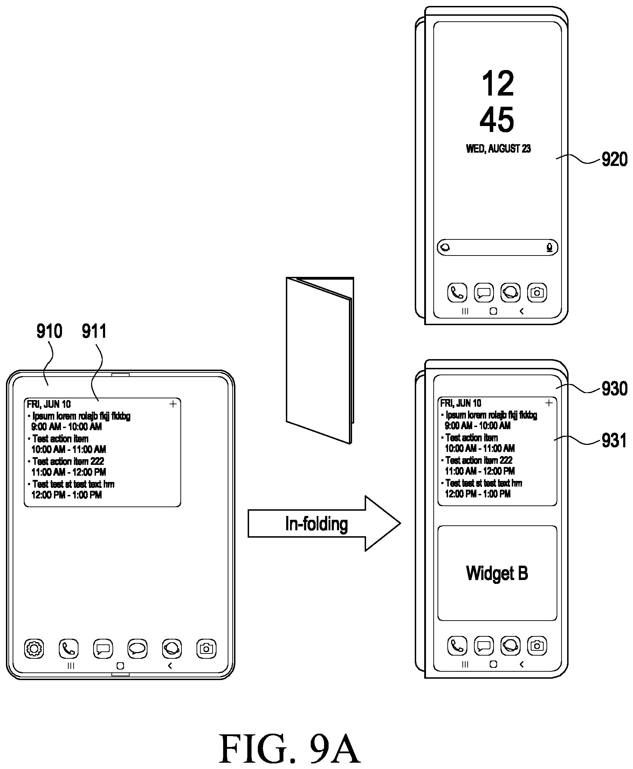

According to an embodiment, an embodiment in which the second UI is displayed on the second display is described in more detail with reference to FIG. 9A.

According to an embodiment, in operation 730, based on the second UI not being disposed (i.e. not being disposed on the second display), the electronic device may obtain (i.e. generate) a second UI corresponding to the first UI based on the size of the second display and may display the second UI on the second display. For example, the electronic device may obtain the second UI corresponding to the first UI based on a size of the cover display, and display the obtained second UI on the second display, based on the second home screen associated with the cover display configured not to display the second UI

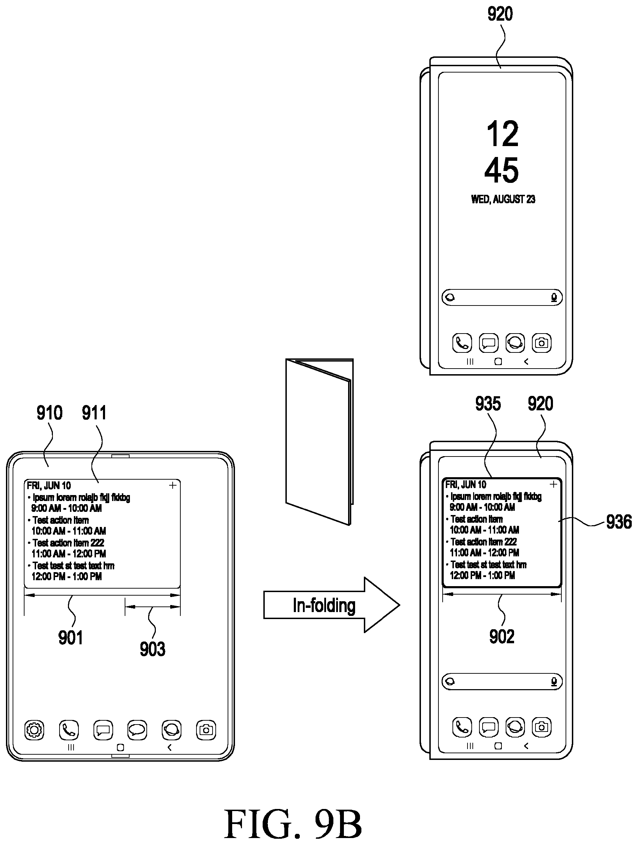

According to an embodiment, when the electronic device is folded left and right with respect to the hinge, the first display activated before in-folding may be a larger display, and the second display activated after in-folding may be a smaller screen. According to an embodiment, the operation of the electronic device when the electronic device is folded left and right with respect to the hinge, and the second display activated after in-folding is smaller than the first display activated before in-folding is described below with reference to FIG. 9B.

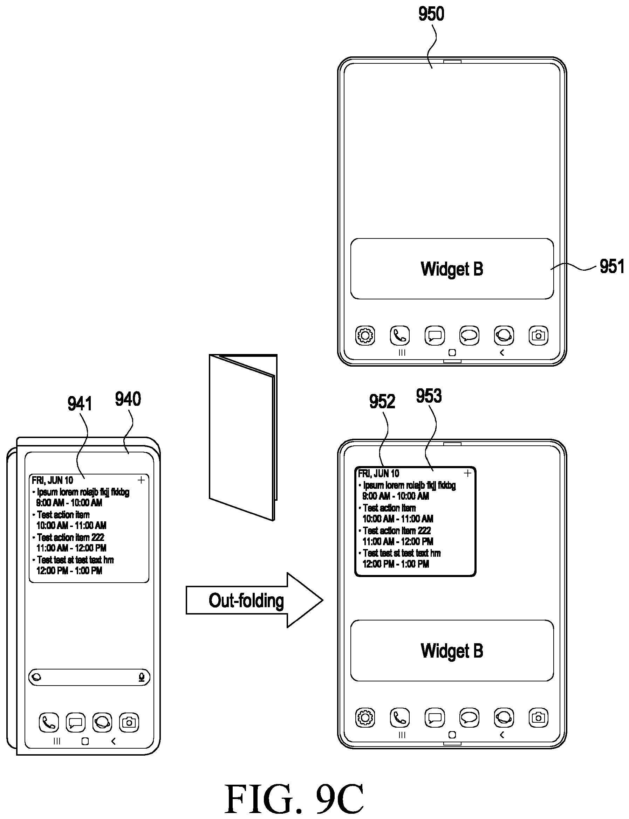

According to an embodiment, when the electronic device is folded left and right with respect to the hinge, the first display activated before in-folding may be a smaller display, and the second display activated after in-folding may be a larger display. According to an embodiment, the operation of the electronic device when the electronic device is folded left and right with respect to the hinge, and the second display activated after in-folding is larger than the first display activated before in-folding is described below with reference to FIG. 9C.

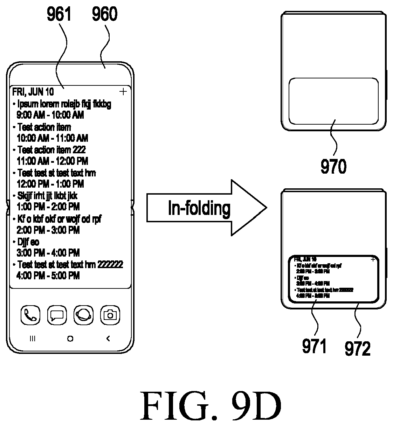

According to an embodiment, when the electronic device is folded up and down with respect to the hinge, the first display activated before in-folding may be a larger display, and the second display activated after in-folding may be a smaller display. According to an embodiment, the operation of the electronic device when the electronic device is folded up and down with respect to the hinge and the second display activated after in-folding is smaller than the first display activated before in-folding is described below with reference to FIG. 9D.

According to an embodiment, the electronic device may include two or more hinges.

According to an embodiment, if the second display or the third display is activated through in-folding and/or out-folding within a set time after a user input is received through the first UI displayed on the first display, the electronic device may display the second UI corresponding to the first UI on the second display or the third display.

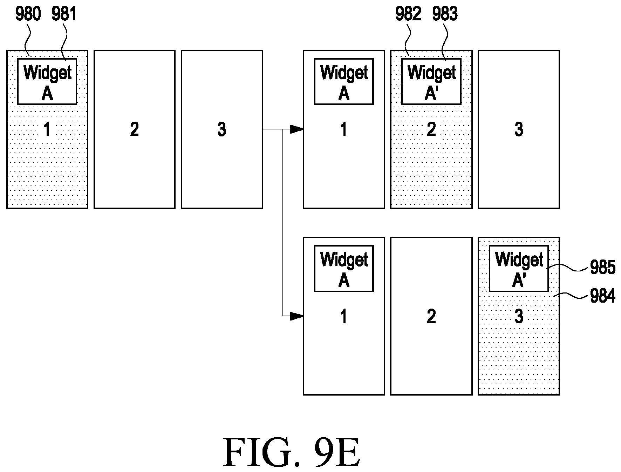

According to an embodiment, the operation of the electronic device when the electronic device includes two or more hinges and the second display or the third display is activated through in-folding and/or out-folding operation within a set time after a user input is received through the first display is described below with reference to FIG. 9E.

According to an embodiment, the electronic device may be a rollable device. According to an embodiment, the front display or the rear display of the electronic device may be extended or contracted through the rolling operation of the flexible display.

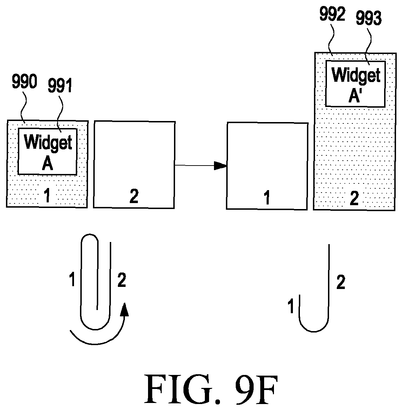

According to an embodiment, the operation of the electronic device when the electronic device is a rollable device and, within a set time after a user input is received through the first UI disposed on the first display which is the front or rear display, the second display which is the remaining display is activated according to a rolling operation is described below with reference to FIG. 9F.

According to an embodiment, based on the second UI not being disposed on the second display of the electronic device, the electronic device may identify a widget having a size most similar to the size of the second display among the plurality of widgets related to the application, and generate the second UI based on the identified widget.

According to an embodiment, the electronic device may preset the plurality of widgets related to the application. Each of the plurality of widgets may have a different horizontal and/or vertical length, and may have a different type of content displayed.

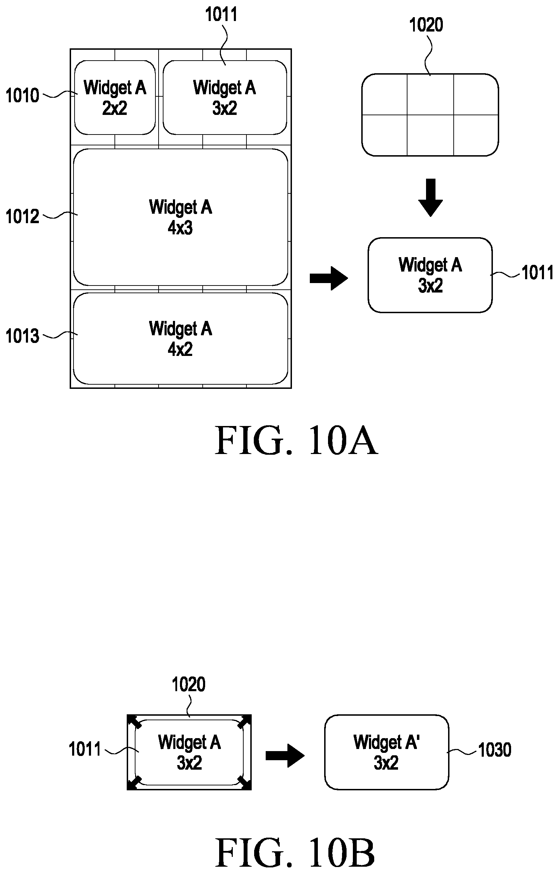

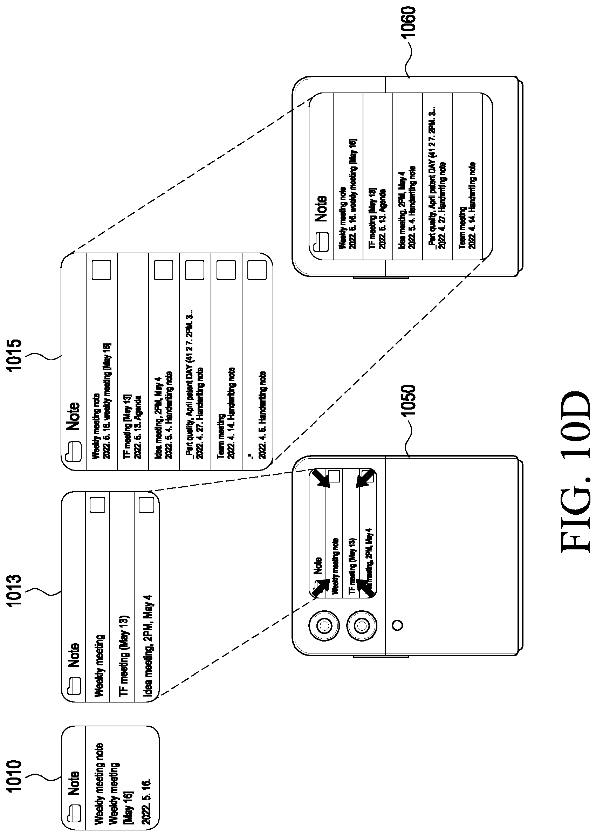

According to an embodiment, the operation of selecting the widget related to the size of the second display from among the plurality of widgets related to the application is described with reference to FIGS. 10A and 10D.

According to an embodiment, the electronic device may expand or contract the widget selected as having a size most similar to the size of the second display, based on the size of the second display. For example, when the selected widget is smaller than the size of the second display, the electronic device may generally expand the size of the selected widget based on the size of the second display. According to an embodiment, when the selected widget is smaller than the size of the second display, the electronic device may add a margin to at least one area of the widget selected based on the size of the second display. According to an embodiment, an operation of enlarging the widget selected as having a size most similar to the size of the second display based on the size of the second display is described below with reference to FIG. 10B.

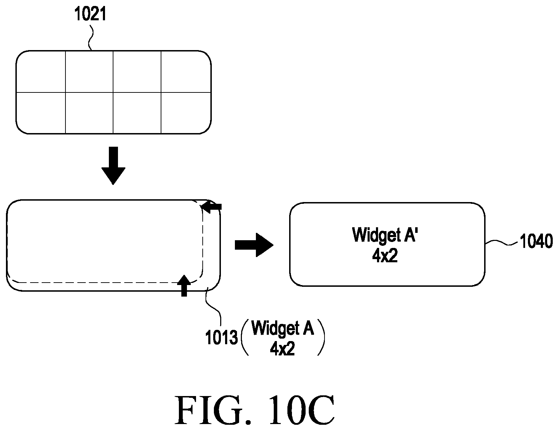

According to an embodiment, the electronic device may shrink the selected widget based on the size of the second display. According to an embodiment, the electronic device may generally reduce the size of the selected widget based on the size of the second display. According to an embodiment, when the selected widget is larger than the size of the second display, the electronic device may crop at least one area of the selected widget based on the size of the second display. According to an embodiment, an operation of cropping at least one area of a widget selected as having a size most similar to the size of the second display based on the size of the second display is described below with reference to FIG. 10C.

According to an embodiment, the electronic device may identify a displayable area of the second display based on the second UI not being disposed. According to an embodiment, the electronic device may identify a displayable area of the second display based on at least one icon and/or at least one widget previously disposed on the second display. For example, the electronic device may identify the displayable area of the second display excluding the area of at least one icon and/or at least one widget previously disposed on the second display of the entire area displayable on the second display.

According to an embodiment, the electronic device may identify a widget having a size most similar to the size of the widget displayable area among the plurality of widgets related to the application. According to an embodiment, the electronic device may generate the second UI based on the identified widget.

According to an embodiment, when the plurality of widgets related to the application are smaller than the widget displayable area, the electronic device may identify the widget most similar in size to the second display among the plurality of widgets, and display the identified widget on the second display in a stack structure. For example, the electronic device may display the identified widget, as a popup screen, to be overlaid with the pre-disposed widget.

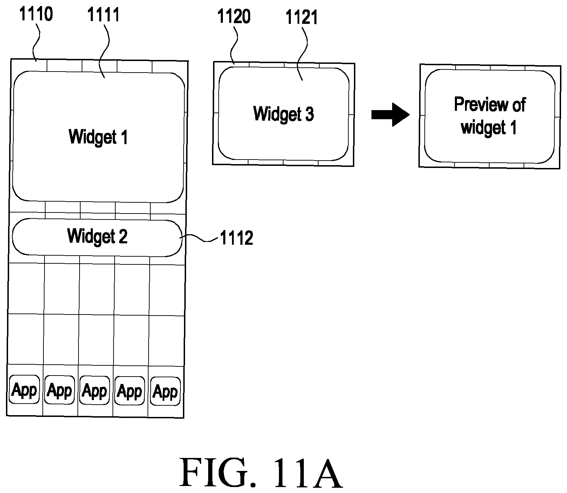

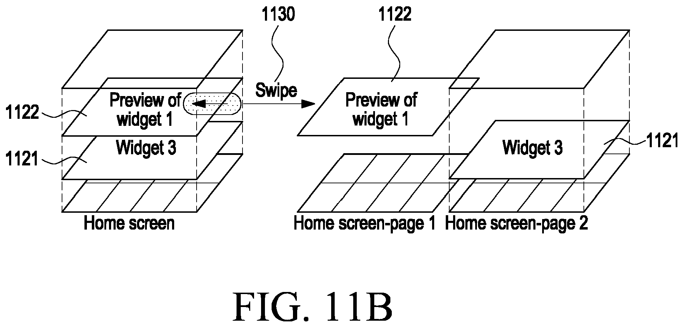

According to an embodiment, a stack structure of a widget pre-disposed on the second display and a widget corresponding to the first UI is described with reference to FIGS. 11A and 11B.

According to an embodiment, the electronic device may identify the displayable area of the second display based on the second UI not being disposed, and may display the second UI generated based on the size of the second display on the second display as a pop-up screen based on the size of the first UI being larger than the displayable area. For example, regardless of the plurality of widgets related to the application corresponding to the first UI, when the size of the first UI displayed on the first display is larger than the displayable area of the second display, the electronic device may display the second UI corresponding to the first UI as a pop-up screen on the second display.

According to an embodiment, the electronic device may delete the second UI based on the user input being not received for a set time after the second UI is displayed on the second display, based on the second UI being not disposed. According to an embodiment, the electronic device may temporarily display the second UI on the second display for continuity of the usage environment in the first display, but may delete the second UI when the user does not use the second UI for a set time.

According to an embodiment, when the second UI displayed on the second display is selected, the electronic device may display an application execution screen corresponding to the second UI.

According to an embodiment, when the second UI is temporarily displayed on the second display and a user input for selecting an area other than the second UI is received, the electronic device may delete the second UI.

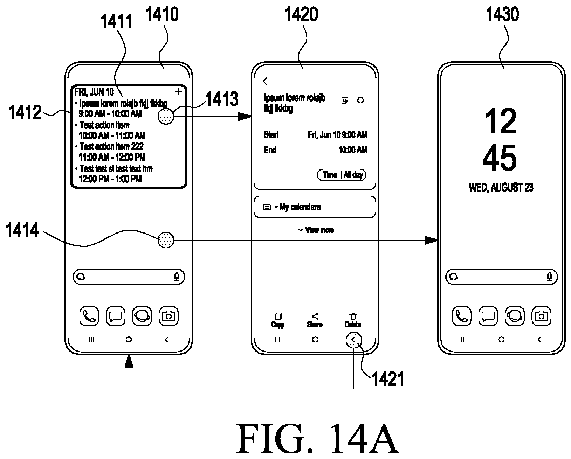

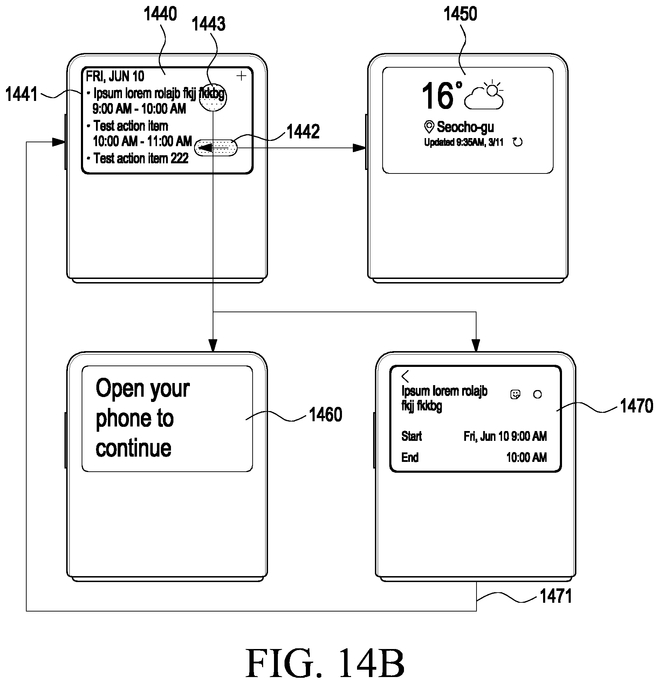

According to an embodiment, an operation of the electronic device according to a user input received after the second UI is displayed on the second display is described below with reference to FIGS. 14A and 14B.

According to an embodiment, based on the second UI not being disposed, the electronic device may delete the second UI when the first display is activated after the second UI is displayed on the second display.

According to an embodiment, the second UI generated based on the second UI not being disposed on the second display may include a visual effect indicating that the second UI is generated to correspond to the first UI.

According to an embodiment, based on the second UI not being disposed, the electronic device may generate the second UI based on the design, transparency, color, and/or font size of the first UI. For example, the electronic device may generate a second UI having the same design, transparency, color, and/or font size as the first UI.

According to an embodiment, based on the second UI not being disposed, the electronic device may generate the second UI based on a scroll position, a cursor position, and/or whether a keyboard screen is displayed on the first UI for a set time before the second display is activated. For example, the electronic device may generate the second UI identical to the second UI in scroll position, cursor position, and/or whether to display the keyboard screen.

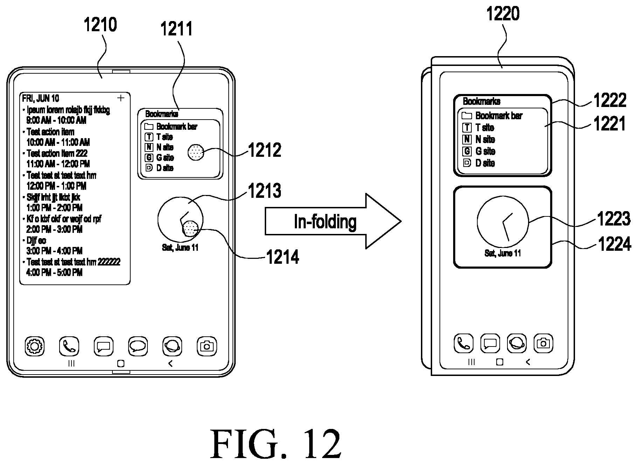

According to an embodiment, when the electronic device uses the plurality of UIs for a set time before the second display is activated, the electronic device may display the plurality of UIs respectively corresponding to the plurality of UIs on the second display when the second display is activated. For example, the electronic device may display a fourth UI corresponding to the third UI together with the second UI on the second display, based on receiving the user input through the third UI displayed on the first display for a set time before activating the second display. According to an embodiment, an operation of the electronic device when the plurality of UIs are used before the second display is activated is described in more detail with reference to FIG. 12.

According to an embodiment, the electronic device may identify a recently used UI of the first UI and the third UI based on the sum of the size of the second UI and the size of the fourth UI being larger than the size of the second display, and may overlay the second UI and the fourth UI such that the UI corresponding to the identified recently used UI, of the second UI and the fourth UI, is disposed at the uppermost end and display the overlaid UI on the second display.

According to an embodiment, based on receiving a user input for displaying the lower UI through the uppermost UI, the electronic device may move the uppermost UI out of the second display or may display the lower UI on the second display by disposing the uppermost UI at the lower end. For example, when the electronic device receives a swipe in one direction through the uppermost UI, the electronic device may move the uppermost UI out of the second display. According to an embodiment, when receiving a user input for disposing the uppermost UI at the lower end, the electronic device may display the lower UI on the second display, and may dispose the uppermost UI at the lower end. According to an embodiment, upon receiving a user input for deleting the uppermost UI, the electronic device may delete the uppermost UI and display the lower UI on the second display.

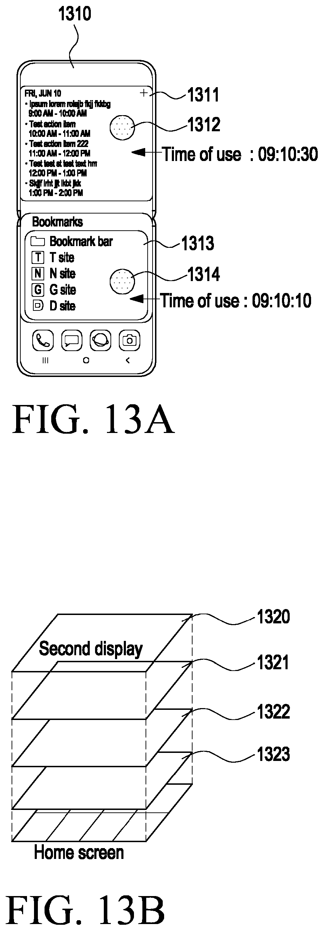

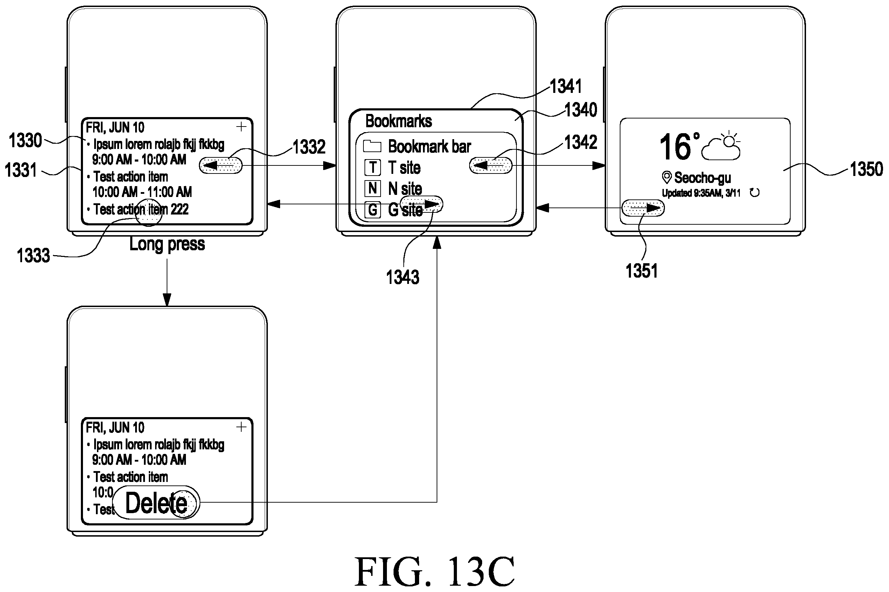

According to an embodiment, an operation of the electronic device in which the stack structure is changed based on a user input when the plurality of UIs are displayed on the second display in a stack structure is described in more detail with reference to FIG. 13A, FIG. 13B, or FIG. 13C.

According to an embodiment, the electronic device may generate the second UI, based on the second UI not currently being disposed on the second display, and may display, on the second display, a message for inducing the second UI to be disposed on the second display, based on the operation of displaying the generated second UI on the second display being performed a set number of times or more.

According to an embodiment, the predetermined number of times may be 1 or more.

According to an embodiment, even if the message inducing the second UI to be disposed on the second display is not displayed, the electronic device may dispose the second UI on the second display through a set gesture or menu after the second UI is displayed on the second display.

According to an embodiment, when the first UI is an execution screen and the execution screen of the application may not be displayed on the second display according to a specific condition (e.g., size, size ratio of the first display to the second display), the electronic device may display the second UI on the second display as a widget.

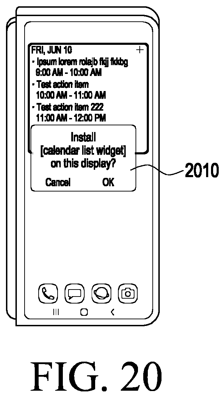

According to an embodiment, the operation of inducing the second UI to be disposed on the second display is described in more detail with reference to FIG. 20.

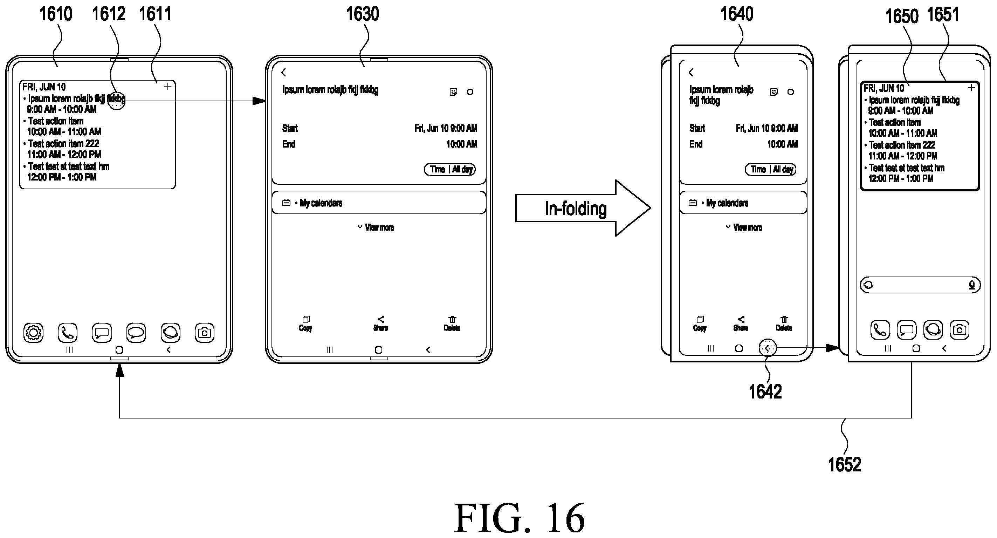

According to an embodiment, an operation of the electronic device when the first UI is an execution screen of an application, and the second display is activated within a set time after a user input through the first UI is described below with reference to FIGS. 16, 18, and 19B.

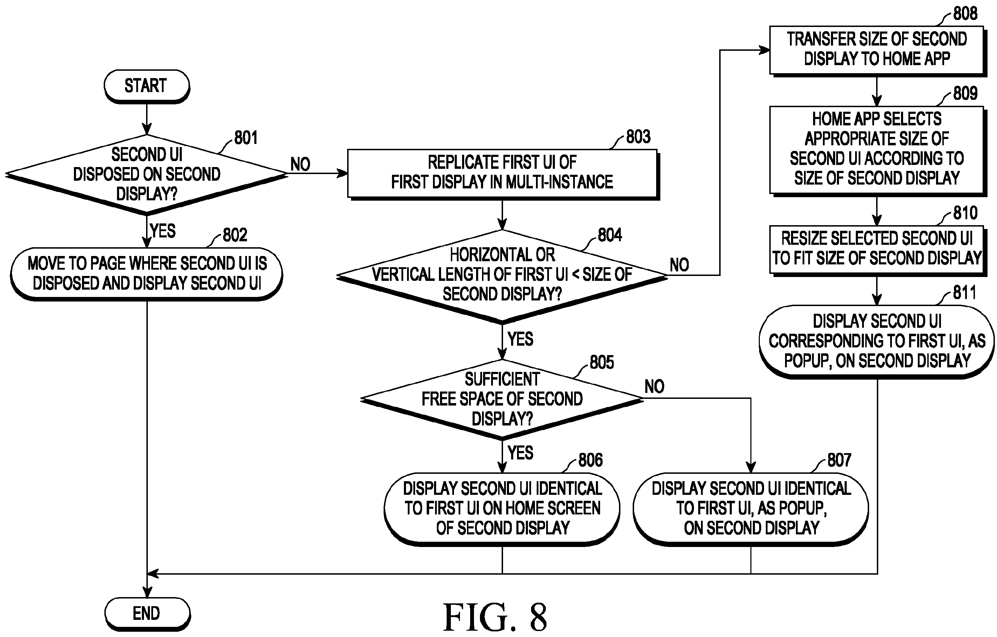

FIG. 8 is a flowchart illustrating an operation of displaying a second UI of an electronic device on a second display depending on the size of the second display and/or whether the second UI is disposed on the second display according to an embodiment.

Referring to FIG. 8, an electronic device (e.g., the electronic device 101 of FIG. 1, the processor 120 of FIG. 1, the electronic device 101 of FIG. 2, the electronic device 400 of FIG. 4A, the electronic device 101 of FIG. 5A, or the electronic device 101 of FIG. 5B) may identify whether a second UI is disposed on the second display in operation 801. For example, the electronic device may identify whether a second UI capable of executing at least one function of an application based on activation of the second display (e.g., the display module 160 of FIG. 1, the display 200 of FIG. 2, the display 430 of FIG. 4A, the rear display 439 of FIG. 4A, the rear display 439 of FIG. 4B, the display 503 of FIG. 5A, and the display 503 of FIG. 5B) within a set time after receiving a user input through a first UI displayed on a first display (e.g., the display module 160 of FIG. 1, the display 200 of FIG. 2, the display 430 of FIG. 4A, the rear display 439 of FIG. 4A, the rear display 439 of FIG. 4B, the display 503 of FIG. 5A, or the display 503 of FIG. 5B). According to an embodiment, when a user input for a plurality of UIs is received through the first display within a set time before the second display is activated, the electronic device may identify whether at least one of the plurality of UIs corresponding to the plurality of UIs displayed on the first display is disposed on the second display. According to an embodiment, whether the second UI is disposed is the same as operation 710 of FIG. 7, and thus a redundant description thereof will be omitted.

According to an embodiment, when it is identified that the second UI is disposed on the second display (Yes in operation 801), in operation 802, the electronic device may move to the page on which the second UI is disposed (viewable, visible) and display the second UI. For example, the electronic device may display the second UI on the second display by displaying, on the second display, the page on which the second UI is disposed among at least one page displayable on the second display.

According to an embodiment, when it is identified that the second UI is not disposed (No in operation 801), in operation 803, the electronic device may replicate the first UI of the first display in a multi instance. According to an embodiment, the multi instance may refer to a state in which, when the same second UI as the first UI is replicated and one of the first UI and the second UI is edited, the same edit is reflected in the other UI.

According to an embodiment, in operation 804, the electronic device may identify whether the width or the length of the first UI is small in the size of the second display. For example, the electronic device may identify whether the horizontal length and/or the vertical length of the first UI is smaller than the horizontal length and/or the vertical length of the second display.

According to an embodiment, when the horizontal or vertical length of the first UI is smaller than the size of the second display (Yes in operation 804), in operation 805, the electronic device may identify whether the free space of the second display is sufficient. For example, the electronic device may identify a free space other than the area in which at least one pre-disposed icon and/or at least one widget is arranged of the entire area of the second display. According to an embodiment, the electronic device may compare the identified free space with the size of the second UI corresponding to the first UI to determine whether there is a free space in which the second UI is to be disposed.

According to an embodiment, when the free space of the second display is sufficient (Yes in operation 805), in operation 806, the electronic device may display the same second UI as the first UI on the home screen of the second display. According to an embodiment, the electronic device may display the same second UI as the first UI in the free space except for the area in which at least one pre-disposed icon and/or at least one widget is disposed of the entire displayable area of the second display.

According to an embodiment, when a user input is received through the plurality of UIs displayed on the first display for a set time before activation of the second display, the electronic device may display the plurality of UIs respectively corresponding to the plurality of UIs displayed on the first display on the second display when it is identified that there is a free space for displaying the plurality of UIs respectively corresponding to the plurality of UIs displayed on the first display.

According to an embodiment, when the free space of the second display is not sufficient (No in operation 805), in operation 807, the electronic device may display the second UI, which is the same as the first UI, as a pop-up on the second display. According to an embodiment, the electronic device may display the second UI on the second display so as to be displayed overlaid on one icon and/or at least one widget pre-disposed on the second display.

According to an embodiment, when a user input is received through the plurality of UIs displayed on the first display for a set time before activation of the second display, the electronic device may display, in a stack structure, the plurality of UIs respectively corresponding to the plurality of UIs displayed on the first display on the second display when it is identified that there is no free space for displaying the plurality of UIs respectively corresponding to the plurality of UIs displayed on the first display. For example, the UI corresponding to the UI that has recently received the user input among the plurality of UIs displayed on the first display may be displayed at the uppermost end of the second display.

According to an embodiment, when the horizontal or vertical length of the first UI is not smaller than the size of the second display (No in operation 804), in operation 808, the electronic device may transfer the size of the second display to the home application (home app). For example, the home application may control the home screen of the first display and/or the home screen of the second display.

According to an embodiment, in operation 809, the home application may select an appropriate size of the second UI according to the size of the second display. For example, the electronic device may select a UI most similar in size to the second display from among a plurality of UIs (e.g., UIs) related to an application corresponding to the first UI.

According to an embodiment, in operation 810, the electronic device may resize the selected second UI according to the size of the second display. For example, the second UI may be generated by expanding or shrinking the UI most similar in size to the second display selected from among the plurality of UIs (e.g., UIs) related to the application based on the size of the second display.

According to an embodiment, in operation 811, the electronic device may display the second UI corresponding to the first UI as a pop-up on the second display. For example, the electronic device may display the same second UI as the first UI on the second display. According to an embodiment, the electronic device may display a second UI including the same content as the first UI and having a different size on the second display.

According to an embodiment, when a user input is received through the plurality of UIs displayed on the first display for a set time before activation of the second display, the electronic device may display the plurality of UIs respectively corresponding to the plurality of UIs displayed on the first display, in a stack structure, on the second display when the size of at least one of the plurality of UIs displayed on the first display is smaller than the second display. For example, the UI corresponding to the UI that has recently received the user input among the plurality of UIs displayed on the first display may be displayed at the uppermost end of the second display.

FIG. 9A is a view illustrating an operation of an electronic device according to in-folding of the electronic device when a second UI is disposed on a second display according to an embodiment.

Referring to FIG. 9A, an electronic device (e.g., the electronic device 101 of FIG. 1, the processor 120 of FIG. 1, the electronic device 101 of FIG. 2, the electronic device 400 of FIG. 4A, the electronic device 101 of FIG. 5A, or the electronic device 101 of FIG. 5B) may display a first UI 911 disposed on the first display in a state in which the first display (e.g., the display module 160 of FIG. 1, the display 200 of FIG. 2, the display 430 of FIG. 4A, the rear display 439 of FIG. 4A, the rear display 439 of FIG. 4B, the display 503 of FIG. 5A, or the display 503 of FIG. 5B) is activated. According to an embodiment, the first UI 911 may be a widget displayed on the home screen 910 of the first display or an execution screen of an application displayed on at least a portion of the first display.

According to an embodiment, when the second display (e.g., the display module 160 of FIG. 1, the display 200 of FIG. 2, the display 430 of FIG. 4A, the rear display 439 of FIG. 4A, the rear display 439 of FIG. 4B, the display 503 of FIG. 5A, or the display 503 of FIG. 5B) is activated through in-folding within a set time after receiving a user input through the first UI 911 displayed on the first display, the electronic device may identify whether a UI corresponding to the first UI 911 is disposed on the second display. For example, the user input through the first UI 911 may be a user interaction such as a touch and/or scroll input to the first UI 911.

According to an embodiment, the UI corresponding to the first UI 911 may be a UI capable of executing at least one function of the application related to the first UI 911 through the second display. For example, the UI may be a widget displayed on the home screen of the second display or the execution screen of the application displayed on at least a portion of the second display.

According to an embodiment, when it is identified that the second UI 931 corresponding to the first UI 911 is disposed on the second display, the electronic device may move to the page 930 on which the second UI 931 is disposed among at least one home screen page displayable on the second display, and may display the second UI 931.

According to an embodiment, even when it is configured that the last displayed screen is displayed through the second display or the home screen 920 of the second display is displayed when the second display is activated, if the second display is activated within a set time after a user input is made through the first UI 911 of the first display, the second UI 931 corresponding to the first UI 911, instead of the home screen 920 of the second display, may be displayed on the second display.

According to an embodiment, the second UI 931 is pre-disposed on the second display, and even if the first display is activated again after the second UI 931 is displayed on the second display, the electronic device may maintain the placement of the second UI 931.

As described above, the electronic device may provide the user with a seamless use feel even when the activated display is changed.

FIG. 9B is a view illustrating an operation of an electronic device according to in-folding of the electronic device when a second UI is not disposed on a second display according to an embodiment.

Referring to FIG. 9B, the electronic device may display the first UI 911 disposed on the first display in a state in which the first display is activated. According to an embodiment, the first UI 911 may be a widget displayed on the home screen 910 of the first display or an execution screen of an application displayed on at least a portion of the first display.

According to an embodiment, when the second display is activated through in-folding within a set time after receiving the user input through the first UI 911 displayed on the first display, the electronic device may identify whether the UI corresponding to the first UI 911 is disposed on the second display. For example, the user input through the first UI 911 may be a user interaction such as a touch and/or scroll input to the first UI 911.

According to an embodiment, the UI corresponding to the first UI 911 may be a UI capable of executing at least one function of the application related to the first UI 911 through the second display. For example, the UI may be a widget displayed on the home screen of the second display or the execution screen of the application displayed on at least a portion of the second display.

According to an embodiment, when the UI corresponding to the first UI 911 is not disposed on the second display, the electronic device may generate the second UI 935 corresponding to the first UI 911. According to an embodiment, the second UI 935 may include a visual effect 936 indicating that the second UI 935 is generated (or temporarily displayed) to correspond to the first UI 911. According to an embodiment, the visual effect may include a highlight displayed as a line or a dot on at least a portion of the second UI 935 or an edge of the second UI 935, a color change of the second UI 935, a transparency change of the second UI 935, and/or a shadow or reflection effect around the second UI 935.

According to an embodiment, even when it is configured that the last displayed screen is displayed through the second display or the home screen 920 of the second display is displayed when the second display is activated, if the second display is activated within a set time after a user input is made through the first UI 911 of the first display, the electronic device may display the generated second UI 935 on the home screen 920 of the second display.

According to an embodiment, the second UI 935 may be generated based on the size of the second display and/or the size of an area displayable on the second display. For example, when the size of the second display is smaller than the size of the first display, the horizontal length 901 of the first UI 911 may be larger than the horizontal length 902 of the second UI 935 generated based on the size of the second display or the size of the displayable area. According to an embodiment, the electronic device may generate the second UI 935 by reducing the horizontal length 901 of the first UI 911 by the length 903 out of the size of the second display.

According to an embodiment, the electronic device may select a widget most similar in size to the second display from among the plurality of widgets of the application related to the first UI 911. For example, when the size of the second display or the size of the area displayable on the second display is smaller than that of the first UI 911, the electronic device may select a widget having a size smaller than that of the first UI 911. According to an embodiment, the electronic device may resize (e.g., expand (or add margin) or shrink (or crop) the selected widget according to the size of the second display. According to an embodiment, the electronic device may place the second UI 935, which is the resized widget, on the home screen 920 of the second display. According to an embodiment, the operation of generating the second UI 935 based on the size of the second display is described in more detail with reference to FIG. 10.

According to an embodiment, based on another UI (e.g., an icon and/or a widget) being disposed on the home screen 920 of the second display, when the second UI 935 may not be disposed on the home screen 920 of the second display, the electronic device may display the second UI 935 as a pop-up screen to be overlaid on another UI.

According to an embodiment, the second UI 935 may be generated based on a theme such as a design, transparency, color, and/or font size of the first UI 911.

According to an embodiment, the second UI 935 may be generated based on a usage situation such as a scroll position, a cursor position, and/or whether to display a keyboard screen on the first UI 911.

According to an embodiment, when the first display is activated again after the second UI 935 is displayed on the second display, the electronic device may delete the second UI 935.

As described above, the electronic device may provide the user with a seamless use feel even when the activated display is changed.

FIG. 9C is a view illustrating an operation of an electronic device according to out-folding of the electronic device when a second UI is not disposed on a second display according to an embodiment. FIG. 9C is a view illustrating an operation of an electronic device according to out-folding of the electronic device when the second UI is not disposed on the second display, according to an embodiment.

Referring to FIG. 9C, the electronic device may display the first UI 941 disposed on the first display in a state in which the first display is activated. According to an embodiment, the first UI 941 may be a widget displayed on the home screen 940 of the first display or an execution screen of an application displayed on at least a portion of the first display.

According to an embodiment, when the second display is activated through out-foldingwithin a set time after receiving the user input through the first UI 941 displayed on the first display, the electronic device may identify whether the UI corresponding to the first UI 941 is disposed on the second display. For example, the user input through the first UI 941 may be a user interaction such as a touch and/or scroll input to the first UI 941.

According to an embodiment, the UI corresponding to the first UI 941 may be a UI capable of executing at least one function of the application related to the first UI 941 through the second display. For example, the UI may be a widget displayed on the home screen of the second display or the execution screen of the application displayed on at least a portion of the second display.

According to an embodiment, when the UI corresponding to the first UI 941 is not disposed on the second display, the electronic device may generate the second UI 952 corresponding to the first UI 941. According to an embodiment, the second UI 952 may include a visual effect 953 indicating that the second UI 935 is generated (or temporarily displayed) to correspond to the first UI 941. According to an embodiment, the visual effect may include a highlight displayed on at least a portion of the second UI 952 or an edge of the second UI 952.

According to an embodiment, even when it is configured that the last displayed screen is displayed through the second display or the home screen 950 of the second display is displayed when the second display is activated, if the second display is activated within a set time after a user input is made through the first UI 941 of the first display, the electronic device may display the generated second UI 952 on the home screen 950 of the second display.

According to an embodiment, the second UI 952 may be generated based on the size of the second display and/or the size of an area displayable on the second display.

According to an embodiment, the electronic device may select a widget most similar in size to the second display from among the plurality of widgets of the application related to the first UI 941. For example, when the size of the second display or the size of the displayable area except for the area of the UI 951 pre-disposed on the second display is larger than that of the first UI 941, the electronic device may select a widget most similar in size to the first UI 941. According to an embodiment, the electronic device may resize (e.g., expand (or add margin) or shrink (or crop) the selected widget according to the size of the second display. According to an embodiment, the electronic device may place the second UI 952, which is the resized widget, on the home screen 950 of the second display.

According to an embodiment, based on another UI 951 (e.g., an icon and/or a widget) being disposed on the home screen 950 of the second display, when the second UI 952 may not be disposed on the home screen 950 of the second display, the electronic device may display the second UI 952 as a pop-up screen to be overlaid on another UI.

According to an embodiment, the second UI 952 may be generated based on a theme such as a design, transparency, color, and/or font size of the first UI 941.

According to an embodiment, the second UI 952 may be generated based on a usage situation such as a scroll position, a cursor position, and/or whether to display a keyboard screen on the first UI 941.

According to an embodiment, when the first display is activated again after the second UI 952 is displayed on the second display, the electronic device may delete the second UI 952.

As described above, the electronic device may provide the user with a seamless use feel even when the activated display is changed.

FIG. 9D is a view illustrating an operation of an electronic device according to in-folding of the electronic device when a second display is smaller according to an embodiment. For example, FIG. 9D is a view illustrating the operation of an electronic device that is folded up and down with respect to a hinge.

Referring to FIG. 9D, the electronic device may display the first UI 961 disposed on the first display in a state in which the first display is activated. According to an embodiment, the first UI 961 may be a widget displayed on the home screen 960 of the first display or an execution screen of an application displayed on at least a portion of the first display.

According to an embodiment, when the second display is activated through in-folding within a set time after receiving the user input through the first UI 961 displayed on the first display, the electronic device may identify whether the UI corresponding to the first UI 961 is disposed on the second display. For example, the user input through the first UI 961 may be a user interaction such as a touch and/or scroll input to the first UI 961.

According to an embodiment, the UI corresponding to the first UI 961 may be a UI capable of executing at least one function of the application related to the first UI 961 through the second display. For example, the UI may be a widget displayed on the home screen of the second display or the execution screen of the application displayed on at least a portion of the second display.

According to an embodiment, when the UI corresponding to the first UI 961 is not disposed on the second display, the electronic device may generate the second UI 971 corresponding to the first UI 961. According to an embodiment, the second UI 971 may include a visual effect 972 indicating that the second UI 935 is generated (or temporarily displayed) to correspond to the first UI 961. According to an embodiment, the visual effect may include a highlight displayed on at least a portion of the second UI 971 or an edge of the second UI 971.

According to an embodiment, even when it is configured that the last displayed screen is displayed through the second display or the home screen 970 of the second display is displayed when the second display is activated, if the second display is activated within a set time after a user input is made through the first UI 961 of the first display, the electronic device may display the generated second UI 971 on the home screen 970 of the second display.

According to an embodiment, the second UI 971 may be generated based on the size of the second display and/or the size of an area displayable on the second display.

According to an embodiment, the electronic device may select a widget most similar in size to the second display from among the plurality of widgets of the application related to the first UI 961. For example, when the size of the second display or the size of the area displayable on the second display is smaller than that of the first UI 961, the electronic device may select a widget most similar in size to the second display and smaller than the first UI 961. According to an embodiment, the electronic device may resize (e.g., expand (or add margin) or shrink (or crop) the selected widget according to the size of the second display. According to an embodiment, the electronic device may display the second UI 971, which is the resized widget, as a popup screen, on the home screen 970 of the second display.

According to an embodiment, based on another UI (e.g., an icon and/or a widget) being disposed on the home screen 970 of the second display, the electronic device may display the second UI 971 as a pop-up screen to be overlaid on the other UI.

According to an embodiment, the second UI 971 may be generated based on a theme such as a design, transparency, color, and/or font size of the first UI 961.

According to an embodiment, the second UI 971 may be generated based on a usage situation such as a scroll position, a cursor position, and/or whether to display a keyboard screen on the first UI 961.

According to an embodiment, when the first display is activated again after the second UI 971 is displayed on the second display, the electronic device may delete the second UI 971.

As described above, the electronic device may provide the user with a seamless use feel even when the activated display is changed.

FIG. 9E is a view illustrating an operation of an electronic device according to in-folding of the electronic device when the electronic device includes two or more hinges according to an embodiment.

Referring to FIG. 9E, the electronic device may display the first UI 981 disposed on the first display in a state in which the first display is activated. According to an embodiment, the first UI 981 may be a widget displayed on the home screen 980 of the first display or an execution screen of an application displayed on at least a portion of the first display.

According to an embodiment, when the second display is activated through in-folding and/or out-folding within a set time after receiving the user input through the first UI 981 displayed on the first display, the electronic device may identify whether the UI corresponding to the first UI 981 is disposed on the second display.

According to an embodiment, when the UI corresponding to the first UI 981 is disposed, the electronic device may move to the page 982 of the home screen of the second display on which the second UI 983 is disposed to display the second UI 983. According to an embodiment, when the UI corresponding to the first UI 981 is not disposed, the electronic device may generate the second UI 983 corresponding to the first UI 981 based on the size of the first UI 981, the size of the second display, and/or the displayable area. According to an embodiment, the second UI 983 may include a visual effect indicating that the second UI 935 is generated (or temporarily displayed) to correspond to the first UI 981. According to an embodiment, the electronic device may dispose the second UI 983 on the second display or display the second UI 983 as a pop-up screen. According to an embodiment, the operation of generating and displaying the second UI 983 is the same as that of FIGS. 9A to 9D, and thus a redundant description thereof will be omitted.

According to an embodiment, when the third display is activated through in-folding and/or out-folding within a set time after receiving the user input through the first UI 981 displayed on the first display, the electronic device may identify whether the UI corresponding to the first UI 981 is disposed on the second display.

According to an embodiment, when the UI corresponding to the first UI 981 is disposed, the electronic device may move to the page 984 of the home screen of the third display on which the third UI 985 is disposed to display the third UI 985. According to an embodiment, when the UI corresponding to the first UI 981 is not disposed, the electronic device may generate the third UI 985 corresponding to the first UI 981 based on the size of the first UI 981, the size of the second display, and/or the displayable area. According to an embodiment, the third UI 985 may include a visual effect indicating that the second UI 935 is generated (or temporarily displayed) to correspond to the first UI 981. According to an embodiment, the electronic device may dispose the third UI 985 on the second display or display the second UI 983 as a pop-up screen. According to an embodiment, the operation of generating and displaying the third UI 985 is the same as that of FIGS. 9A to 9D, and thus a redundant description thereof will be omitted.

According to an embodiment, the second UI 983 and/or the third UI 985 may be generated based on a theme such as a design, transparency, color, and/or font size of the first UI 981.

According to an embodiment, the second UI 983 and/or the third UI 985 may be generated based on a usage situation such as a scroll position, a cursor position, and/or whether to display a keyboard screen on the first UI 981.

According to an embodiment, when the first display is activated again after the second UI 983 and/or the third UI 985 is generated and displayed on the second display, the electronic device may delete the second UI 983 and/or the third UI 985.

As described above, the electronic device may provide the user with a seamless use feel even when the activated display is changed.

FIG. 9F is a view illustrating an operation of an electronic device according to extension of the electronic device when the electronic device is a rollable electronic device according to an embodiment. FIG. 9F is a view for describing an operation of an electronic device according to an extension of the electronic device when the electronic device is a rollable device, according to an embodiment of the disclosure.

Referring to FIG. 9F, the electronic device may display the first UI 991 disposed on the first display in a state in which the first display is activated. According to an embodiment, the first display may be activated in a state in which the flexible display is extended or contracted. According to an embodiment, the first UI 991 may be a widget displayed on the home screen 990 of the first display or an execution screen of an application displayed on at least a portion of the first display.

According to an embodiment, when the second display is activated through extension or contraction within a set time after receiving the user input through the first UI 991 displayed on the first display, the electronic device may identify whether the UI corresponding to the first UI 991 is disposed on the second display.

According to an embodiment, when the UI corresponding to the first UI 991 is disposed, the electronic device may move to the page 992 of the home screen of the second display on which the second UI 993 is disposed to display the second UI 993. According to an embodiment, when the UI corresponding to the first UI 991 is not disposed, the electronic device may generate the second UI 993 corresponding to the first UI 991 based on the size of the first UI 991, the size of the second display, and/or the displayable area. According to an embodiment, the second UI 993 may include a visual effect indicating that the second UI 935 is generated (or temporarily displayed) to correspond to the first UI 991. According to an embodiment, the electronic device may dispose the second UI 993 on the second display or display the second UI 983 as a pop-up screen. According to an embodiment, the operation of generating and displaying the second UI 993 is the same as that of FIGS. 9A to 9D, and thus a redundant description thereof will be omitted.

According to an embodiment, the second UI 993 may be generated based on a theme such as a design, transparency, color, and/or font size of the first UI 991.

According to an embodiment, the second UI 993 may be generated based on a usage situation such as a scroll position, a cursor position, and/or whether to display a keyboard screen on the first UI 991.

According to an embodiment, when the first display is activated again after the second UI 993 is generated and displayed on the second display, the electronic device may delete the second UI 993.

As described above, the electronic device may provide the user with a seamless use feel even when the activated display is changed.

FIG. 10A is a view illustrating an operation of selecting a widget based on the size of a second display of an electronic device according to an embodiment.

Referring to FIG. 10A, an electronic device (e.g., the electronic device 101 of FIG. 1, the processor 120 of FIG. 1, the electronic device 101 of FIG. 2, the electronic device 400 of FIG. 4A, the electronic device 101 of FIG. 5A, or the electronic device 101 of FIG. 5B) may select a first widget 1011 most similar in size to the second display (e.g., the display module 160 of FIG. 1, the display 200 of FIG. 2, the display 430 of FIG. 4A, the rear display 439 of FIG. 4A, the rear display 439 of FIG. 4B, the display 503 of FIG. 5A, and the display 503 of FIG. 5B) from among a plurality of widgets 1010, 1011, 1012, and 1013 that may be provided from the application corresponding to the first UI displayed on the first display (e.g., the display module 160 of FIG. 1, the display 200 of FIG. 2, the display 430 of FIG. 4A, the rear display 439 of FIG. 4A, the rear display 439 of FIG. 4B, the display 503 of FIG. 5A, or the display 503 of FIG. 5B). According to an embodiment, the plurality of widgets may have different sizes and/or types of included content (e.g., the type of included item, whether an image is included, and whether only a summary of text is included).

According to an embodiment, the electronic device may transmit the size 1020 (e.g., 3x2) information about the second display to the home application, and the home application may select the first widget 1011 having the size most similar to the size 1020 of the second display from among the plurality of widgets 1010, 1011, 1012, and 1013.

In the above description, the widget is selected based first on the size 1020 of the first display, but according to an embodiment, one of the plurality of widgets 1010, 1011, 1012, and 1013 may be selected to include all types of content included in the first UI.

FIG. 10B is a view illustrating an operation of extending a widget based on the size of a second display of an electronic device according to an embodiment.

Referring to FIG. 10B, when the size of the second display is larger than the size of the selected first widget 1011, the electronic device may enlarge the first widget 1011 to fit the size of the second display to obtain an enlarged widget 1030. According to an embodiment, the electronic device may zoom in the first widget 1011 to match the size of the second display to increase the size and reduce the resolution, thereby obtaining the enlarged widget 1030. According to an embodiment, the electronic device may obtain the enlarged widget 1030 by adding a margin to at least one area of the first widget 1011.

FIG. 10C is a view illustrating an operation of cropping a widget based on the size of a second display of an electronic device according to an embodiment.

Referring to FIG. 10C, when the size 1021 (e.g., 4x2) of the second display is smaller than the size of the selected second widget 1021, the electronic device may shrink the second widget 1013 to fit the size of the second display to obtain a shrunken widget 1040. According to an embodiment, the electronic device may zoom out the second widget 1013 to match the size of the second display to decrease the size, thereby obtaining the shrunken widget 1040. According to an embodiment, the electronic device may obtain the enlarged widget 1040 by cropping at least one area of the second widget 1013.

FIG. 10D is a view illustrating an operation of selecting a widget based on the size of a second display of an electronic device according to an embodiment.

Referring to FIG. 10D, when the widgets providable by the application corresponding to the first UI disposed on the first display include a 1x1 first widget 1010, a 4x2 second widget 1013, and/or a 4x4 third widget 1015, the electronic device may select a widget based on the size of the second display.

For example, when the second display has a 4x2 form 1050, the electronic device may select the 4x2 second widget 1013, resize the second widget 1013 to fit the size of the second display, and display the second widget 1013 on the second display.

According to an embodiment, when the second display has a 4x4 form 1060, the electronic device may select the 4x4 third widget 1015, resize the third widget 1015 to fit the size of the second display, and display the third widget on the second display. According to an embodiment, the electronic device may change the type of content included in the widget based on the size of the second display. For example, when the third widget 1015 includes a content summary and/or an image, the electronic device may include only the content summary in the widget in which the third widget 1015 has been resized to be small to fit the size of the second display, and may omit the image.

FIG. 11A is a view illustrating an operation of displaying a second UI corresponding to a first UI in a state in which a UI is disposed on a second display of an electronic device according to an embodiment.

Referring to FIG. 11A, when an electronic device (e.g., the electronic device 101 of FIG. 1, the processor 120 of FIG. 1, the electronic device 101 of FIG. 2, the electronic device 400 of FIG. 4A, the electronic device 101 of FIG. 5A, or the electronic device 101 of FIG. 5B) may generate a preview widget 1122 corresponding to the first widget 1111 and display it on the second display when the second display 1120 is activated after a user input is received through the first widget 1111 of the first display 1110 in a state in which the first widget 1111 and the second widget 1112 are disposed on the first display 1110, and the third widget 1121 is disposed on the second display 1120. According to an embodiment, the preview widget 1122 may be one obtained by resizing the first widget 1111 to fit the size of the second display.

According to an embodiment, the electronic device may display the preview widget 1122 in the stack structure of FIG. 11B in which the preview widget 1122 is positioned above the third widget 1121 pre-positioned on the second display. According to an embodiment, the preview widget 1122 may include a visual effect 1123 indicating that the preview widget 1122 is generated to correspond to the first widget 1111.

FIG. 11B is a view illustrating a stack structure of UIs when a second UI corresponding to a first UI is displayed in a state in which a UI is disposed on a second display of an electronic device according to an embodiment.

Referring to FIG. 11B, even if there is a third widget 1121 pre-disposed on the home screen of the second display, the electronic device may overlay the preview widget 1122 on the third widget 1121 such that the preview widget 1122 of the first widget 1111 is displayed.

According to an embodiment, when a user input 1130 (e.g., a swipe) for displaying the lower widget is received through the preview widget 1122 disposed at the top and displayed on the second display, the electronic device may expand the home screen to two pages, move the preview widget 1122 to one page of the home screen that is not displayed on the second display, and display the third widget 1121 on the second display.

FIG. 12 is a view illustrating an operation when a second display is activated after a plurality of UIs are used on a first display of an electronic device according to an embodiment.

Referring to FIG. 12, an electronic device (e.g., the electronic device 101 of FIG. 1, the processor 120 of FIG. 1, the electronic device 101 of FIG. 2, the electronic device 400 of FIG. 4A, the electronic device 101 of FIG. 5A, or the electronic device 101 of FIG. 5B) may identify whether a third widget 1221 corresponding to the first widget 1211 and/or a fourth widget 1223 corresponding to the second widget 1213 is disposed on the home screen 1220 of the second display if the second display is activated through in-folding within a set time after receiving a user input 1212 through the first widget 1211 among a plurality of widgets disposed on a home screen 1210 of a first display and receiving a user input 1214 through the second widget 1213. For example, the electronic device may identify whether the second display is activated through in-folding within a set time after the user input received first, of the user input 1212 through the first widget 1211 and the user input 1214 through the second widget 1213, is received.

According to an embodiment, when the third widget 1221 corresponding to the first widget 1211 and/or the fourth widget 1223 corresponding to the second widget 1213 is not disposed on the home screen 1220 of the second display, the electronic device may generate the third widget 1221 corresponding to the first widget 1211 and the fourth widget 1223 corresponding to the second widget 1213, which are used within a set time before in-folding, and may display the generated third widget 1221 and fourth widget 1223 on the home screen 1220 of the second display. According to an embodiment, when the area to display the third widget 1221 and the fourth widget 1223 on the second display is sufficient, the electronic device may place both the third widget 1221 and the fourth widget 1223 on the second display. According to an embodiment, when the area to display the third widget 1221 and the fourth widget 1223 on the second display is not sufficient, the electronic device may overlay and display the third widget 1221 and the fourth widget 1223 on the second display. According to an embodiment, the operation of overlaying and displaying the third widget 1221 and the fourth widget 1223 is described below with reference to FIGS. 13A to 13C.

According to an embodiment, the third widget 1221 may include a visual effect 1222 indicating that the third widget 1221 is generated to correspond to the first widget 1211, and the fourth widget 1223 may include a visual effect 1224 indicating that the third widget 1221 is generated to correspond to the second widget 1213.

According to an embodiment, when one of the third widget 1221 corresponding to the first widget 1211 or the fourth widget 1223 corresponding to the second widget 1213 is disposed on the home screen 1220 of the second display, the other widget of the third widget 1221 and the fourth widget 1223 may be generated and displayed on the page on which the third widget 1221 or the fourth widget 1223 is disposed, and the generated widget may include a visual effect.

According to an embodiment, when the third widget 1221 corresponding to the first widget 1211 and the fourth widget 1223 corresponding to the second widget 1213 are disposed on different pages, the electronic device may generate and display the remaining widget of the third widget 1221 and the fourth widget 1223 on the page on which the widget corresponding to the widget recently used before in-folding is disposed of the third widget 1221 and the fourth widget 1223, and the generated widget may include a visual effect.

FIG. 13A is a view illustrating an operation of using a plurality of UIs on a first display of an electronic device according to an embodiment.

Referring to FIG. 13A, an electronic device (e.g., the electronic device 101 of FIG. 1, the processor 120 of FIG. 1, the electronic device 101 of FIG. 2, the electronic device 400 of FIG. 4A, the electronic device 101 of FIG. 5A, or the electronic device 101 of FIG. 5B) may identify whether the widget corresponding to the first widget 1311 and/or the widget corresponding to the second widget 1313 is disposed on the home screen of the second display if the second display is activated through in-folding within a set time after receiving (e.g., receiving at 09:10:10) a user input 1312 through the first widget 1311 among the plurality of widgets disposed on the home screen 1310 of the first display and receiving (e.g., receiving at 09:10:30) a user input 1314 through the second widget 1313.

According to an embodiment, when at least one of the widget corresponding to the first widget 1311 and/or the second widget 1313 is not disposed on the home screen of the second display, the electronic device may generate at least one of the widget corresponding to the first widget 1311 and/or the widget corresponding to the second widget 1313. According to an embodiment, the generated widget may include a visual effect.

According to an embodiment, when the area to display the widget pre-disposed on the second display, the widget corresponding to the first widget 1311, and/or the widget corresponding to the second widget 1313 is not sufficient, the electronic device may overlay and display the plurality of widgets as shown in FIG. 13B.

FIG. 13B is a view illustrating a stack structure of UIs displayed on a second display of an electronic device according to an embodiment.

Referring to FIG. 13B, the electronic device may overlay and display a plurality of widgets on the home screen of the second display 1320.

According to an embodiment, the electronic device may dispose a third widget 1321 corresponding to the recently used second widget 1312 of the first widget 1311 and the second widget 1312 illustrated in FIG. 13A at the top, may dispose a fourth widget 1322 corresponding to the first widget 1311 under the third widget 1321, and may dispose a fifth widget 1323 pre-disposed on the second display 1320 at the bottom.

FIG. 13C is a view illustrating an operation of displaying a UI on a second display of an electronic device according to the UI stack structure of FIG. 13B.

Referring to FIG. 13C, the electronic device may display the third widget 1321 disposed at the top of the stack structure as a full screen on the second display.

According to an embodiment, the third widget 1321 may include a visual effect 1330 indicating that the third widget 1321 is generated to correspond to the second widget of the first display.

According to an embodiment, when a user input 1331 (e.g., a swipe) for moving the third widget 1321 is received through the third widget 1321, the electronic device may expand the home screen to a plurality of pages, move the third widget 1321 to a page that is not displayed on the second display, and display the fourth widget 1322 disposed under the third widget 1321 as a full screen on the second display.

According to an embodiment, when a user input 1332 (e.g., a long press) for deleting the third widget 1321 is received through the third widget 1321, the electronic device may display a UI 1333 for deleting the third widget 1321.

According to an embodiment, when a user input for selecting the UI 1333 for deleting the third widget 1321 is received, the electronic device may delete the third widget 1321 and may display the fourth widget 1322 disposed under the third widget 1321 as a full screen on the second display.

According to an embodiment, the fourth widget 1322 may include a visual effect 1340 indicating that the third widget 1321 is generated to correspond to the function widget of the first display.

According to an embodiment, when a user input 1342 (e.g., a swipe) for re-displaying the third widget 1321 is received through the fourth widget 1322, the electronic device may move the third widget 1321 disposed on the page that is not displayed on the second display to the page displayed on the second display, may dispose the third widget 1321 on the fourth widget 1322, and may display the third widget 1321 as a full screen on the second display.

According to an embodiment, when a user input 1341 (e.g., a swipe) for moving the fourth widget 1322 is received through the fourth widget 1322, the electronic device may move the second widget 1322 to a page that is not displayed on the second display, and may display the fifth widget 1323 disposed under the fourth widget 1322 as a full screen on the second display. According to an embodiment, the fifth widget 1323 is a widget pre-disposed on the home screen of the second display, and may not include the visual effects 1330 and 1340 included in the third widget 1321 and the fourth widget 1322.

According to an embodiment, the fourth widget 1322 may move to a page that is not displayed on the second display and may be disposed on the third widget 1321.

According to an embodiment, when a user input 1350 (e.g., a swipe) for re-displaying the fourth widget 1322 is received through the fifth widget 1323, the electronic device may move the fourth widget 1322 disposed on the page that is not displayed on the second display to the page displayed on the second display, may dispose the fourth widget 1322 on the fifth widget 1323, and may display the fourth widget 1322 as a full screen on the second display.

FIG. 14A is a view illustrating an operation according to a user input received after a second UI is displayed on a second display of an electronic device according to an embodiment.

Referring to FIG. 14A, an electronic device (e.g., the electronic device 101 of FIG. 1, the processor 120 of FIG. 1, the electronic device 101 of FIG. 2, the electronic device 400 of FIG. 4A, the electronic device 101 of FIG. 5A, or the electronic device 101 of FIG. 5B) may display the second UI 1411 corresponding to the first UI of the first display where a user input is received within a set time before the second display is activated, on the second display (e.g., the display module 160 of FIG. 1, the display 200 of FIG. 2, the display 430 of FIG. 4A, the rear display 439 of FIG. 4A, the rear display 439 of FIG. 4B, the display 503 of FIG. 5A, or the display 503 of FIG. 5B). According to an embodiment, the second UI 1411 may be a widget disposed on the home screen 1410 of the second display. According to an embodiment, the second UI 1411 may include a visual effect 1412 indicating that the second UI 1411 is generated to correspond to the first UI.

According to an embodiment, when a user input 1413 for selecting the second UI 1411 is received, the electronic device may display the execution screen 1420 of the application corresponding to the second UI 1411 as a full screen on the second display. According to an embodiment, when a user input 1421 (e.g., a back key) for displaying a home screen is received on the execution screen 1420 of the application, the electronic device may display the home screen 1410 of the second display including the second UI 1411.

According to an embodiment, when a user input 1414 for selecting an area other than the area in which the second UI 1411 is disposed is received, the electronic device may display the home screen 1430 of the second display where the displayed second UI 1411 has been deleted.

As described above, even if the UI is temporarily generated for continuity of the user's sense of use, the electronic device may automatically delete the UI when the user no longer intends to use the UI.

FIG. 14B is a view illustrating an operation according to a user input received after a second UI is displayed on a second display of an electronic device according to an embodiment.

Referring to FIG. 14B, the electronic device may display a second UI 1440 corresponding to the first UI of the first display, in which a user input is received within a set time before activation of the second display, as a full screen on the second display. According to an embodiment, the second UI 1440 may be a widget disposed on the home screen of the second display. According to an embodiment, the second UI 1440 may include a visual effect 1441 indicating that the second UI 1411 is generated to correspond to the first UI.

According to an embodiment, when a user input 1443 for selecting the second UI 1440 is received, the electronic device may determine whether the execution screen of the application corresponding to the second UI 1440 may be displayed on the second display. For example, the electronic device may identify whether the execution screen of the application may be displayed on the second display based on the size of the execution screen of the application, the size of the second display, and/or the type of content included in the execution screen of the application.

According to an embodiment, when it is determined that the execution screen of the application corresponding to the second UI 1440 may not be displayed on the second display, the electronic device may display a message 1460 (e.g., open your mobile phone to continue) inducing the device to be out-folded to activate the first display, which is a larger screen.

According to an embodiment, when it is determined that the execution screen of the application corresponding to the second UI 1440 may be displayed on the second display, the electronic device may display the execution screen 1470 of the application corresponding to the second UI 1440 as a full screen on the second display. According to an embodiment, the electronic device may further display a visual effect indicating that the execution screen 1470 of the application is displayed through the temporarily generated second UI 1440.

According to an embodiment, when a user input 1471 (e.g., a back key or a swipe) for displaying a home screen is received on the execution screen 1470 of the application, the electronic device may display the second UI 1440 as a full screen of the second display.

According to an embodiment, when a user input 1442 (e.g., swipe) for displaying the UI 1450 under the second UI 1440 is received, the electronic device may move the second UI 1440 to the page of the home screen which is not displayed on the second display, and may display the UI 1450 pre-disposed on the second display under the second UI 1440. According to an embodiment, the UI 1450 pre-positioned on the second display may not include the visual effect included in the second UI 1440.

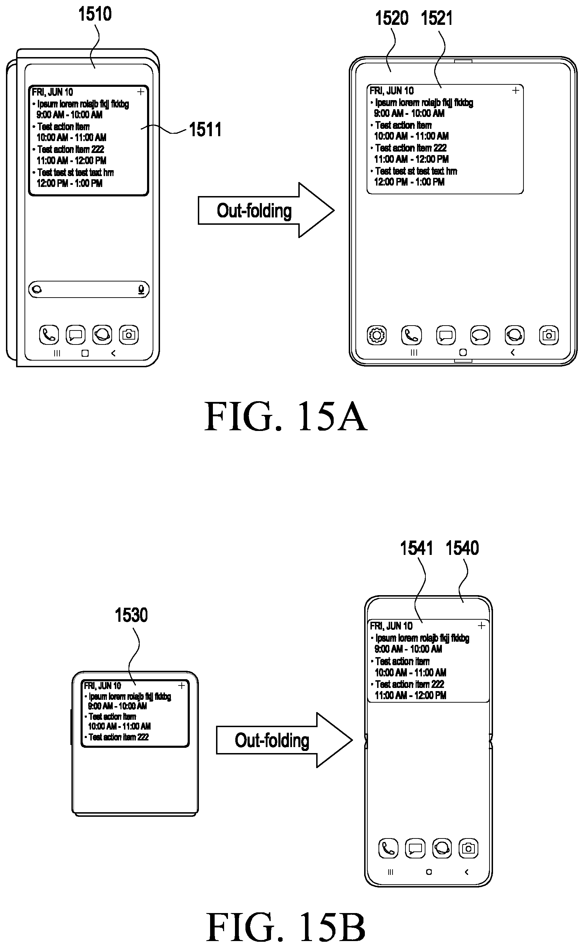

FIG. 15A is a view illustrating an operation when a first display is activated after a second UI is displayed on a second display of an electronic device according to an embodiment.

Referring to FIG. 15A, an electronic device (e.g., the electronic device 101 of FIG. 1, the processor 120 of FIG. 1, the electronic device 101 of FIG. 2, the electronic device 400 of FIG. 4A, the electronic device 101 of FIG. 5A, or the electronic device 101 of FIG. 5B) may display the second UI 1511 corresponding to the first UI of the first display where a user input is received within a set time before the second display is activated, on the second display (e.g., the display module 160 of FIG. 1, the display 200 of FIG. 2, the display 430 of FIG. 4A, the rear display 439 of FIG. 4A, the rear display 439 of FIG. 4B, the display 503 of FIG. 5A, or the display 503 of FIG. 5B). According to an embodiment, the second UI 1511 may be a widget disposed on the home screen 1510 of the second display. According to an embodiment, the second UI 1511 may include a visual effect indicating that the second UI 1411 is generated to correspond to the first UI.

According to an embodiment, when the electronic device is out-folded in the state in which the second UI 1511 is disposed on the second display to activate the first display (e.g., the display module 160 of FIG. 1, the display 200 of FIG. 2, the display 430 of FIG. 4A, the rear display 439 of FIG. 4A, the rear display 439 of FIG. 4B, the display 503 of FIG. 5A, or the display 503 of FIG. 5B), the electronic device may display the first UI 1521 disposed on the home screen 1520 of the first display regardless of whether the second UI 1511 is used. According to an embodiment, the first UI 1521 may be in the same state as the state before the second UI 1511 is generated.

According to an embodiment, the electronic device may delete the second UI 1511 disposed on the second display.

FIG. 15B is a view illustrating an operation when a first display is activated after a second UI is displayed on a second display of an electronic device according to an embodiment.

Referring to FIG. 15B, the electronic device may display a second UI 1530 corresponding to the first UI of the first display, in which a user input is received within a set time before activation of the second display, as a full screen on the second display. According to an embodiment, the second UI 1530 may include a visual effect indicating that the second UI 1411 is generated to correspond to the first UI.

According to an embodiment, when the electronic device is out-folded in the state in which the second UI 1530 is disposed on the second display to activate the first display, the electronic device may display the first UI 1541 disposed on the home screen 1540 of the first display regardless of whether the second UI 1530 is used. According to an embodiment, the first UI 1541 may be in the same state as the state before the second UI 1530 is generated.

According to an embodiment, the electronic device may delete the second UI 1530 disposed on the second display.

FIG. 16 is a view illustrating an operation of displaying a second UI on a second display when in-folded in a state in which an execution screen is displayed through a first display of an electronic device according to an embodiment.

Referring to FIG. 16, an electronic device (e.g., the electronic device 101 of FIG. 1, the processor 120 of FIG. 1, the electronic device 101 of FIG. 2, the electronic device 400 of FIG. 4A, the electronic device 101 of FIG. 5A, or the electronic device 101 of FIG. 5B) may display an execution screen 1630 of an application corresponding to the first UI 1611 when receiving a user input 1612 for selecting the first UI 1611 disposed on the home screen 1610 of the first display (e.g., the display module 160 of FIG. 1, the display 200 of FIG. 2, the display 430 of FIG. 4A, the rear display 439 of FIG. 4A, the rear display 439 of FIG. 4B, the display 503 of FIG. 5A, or the display 503 of FIG. 5B). According to an embodiment, the first UI 1611 may be a widget disposed on the home screen 1610.

According to an embodiment, when the second display (e.g., the display module 160 of FIG. 1, the display 200 of FIG. 2, the display 430 of FIG. 4A, the rear display 439 of FIG. 4A, the rear display 439 of FIG. 4B, the display 503 of FIG. 5A, or the display 503 of FIG. 5B) is activated by in-folding in a state in which the execution screen 1630 of the application is displayed on the first display, the electronic device may display the execution screen 1640 of the application resized from the execution screen 1630 of the application on the second display.

According to an embodiment, when a user input 1642 (e.g., a back key) for displaying the home screen of the second display is received through the execution screen 1640 of the resized application, the electronic device may display the second UI 1650 corresponding to the first UI 1611 on the home screen of the second display. According to an embodiment, the second UI 1650 may include a visual effect 1651 indicating that the second UI 1411 is generated to correspond to the first UI 1611. According to an embodiment, the operation of generating the second UI 1650 is the same as the operation illustrated in FIGS. 7 and 8, and thus a redundant description thereof will be omitted.

According to an embodiment, when the first display is activated through out-folding in a state in which the second UI 1650 is disposed on the second display, the electronic device may display the first UI 1611 disposed on the home screen 1610 of the first display regardless of whether the second UI 1650 is used. According to an embodiment, the first UI 1611 may be in the same state as the state before the second UI 1650 is generated.

According to an embodiment, the electronic device may delete the second UI 1650 disposed on the second display.

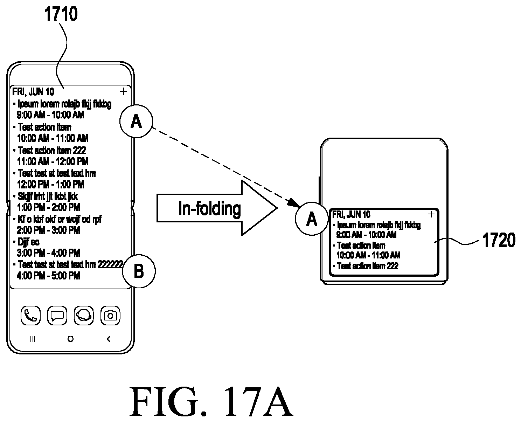

FIG. 17A is a view illustrating an operation of displaying an uppermost area of a first UI displayed on a first display of an electronic device, as a second UI corresponding to the first UI, on a second display according to an embodiment.

Referring to FIG. 17A, an electronic device (e.g., the electronic device 101 of FIG. 1, the processor 120 of FIG. 1, the electronic device 101 of FIG. 2, the electronic device 400 of FIG. 4A, the electronic device 101 of FIG. 5A, or the electronic device 101 of FIG. 5B) may display the second UI 1720 corresponding to the first UI 1710 on the second display when activating the second display through in-folding after receiving a user input through the first UI 1710 disposed on the first display (e.g., the display module 160 of FIG. 1, the display 200 of FIG. 2, the display 430 of FIG. 4A, the rear display 439 of FIG. 4A, the rear display 439 of FIG. 4B, the display 503 of FIG. 5A, or the display 503 of FIG. 5B).

According to an embodiment, when the size of the second display is smaller than the size of the first UI 1710, the electronic device may display a portion of the upper portion A and the lower portion B of the first UI 1710 on the second display.

According to an embodiment, when the upper portion A of the upper portion A and the lower portion B of the first UI 1710 is used after touching the first UI 1710, or when there is no specific area used, the electronic device may display the second UI 1720 based on the upper portion A of the first UI 1710.

According to an embodiment, when a scroll input is received through the second UI 1720, the electronic device may scroll the second UI 1720 to display a portion corresponding to the lower portion B of the first UI 1710.

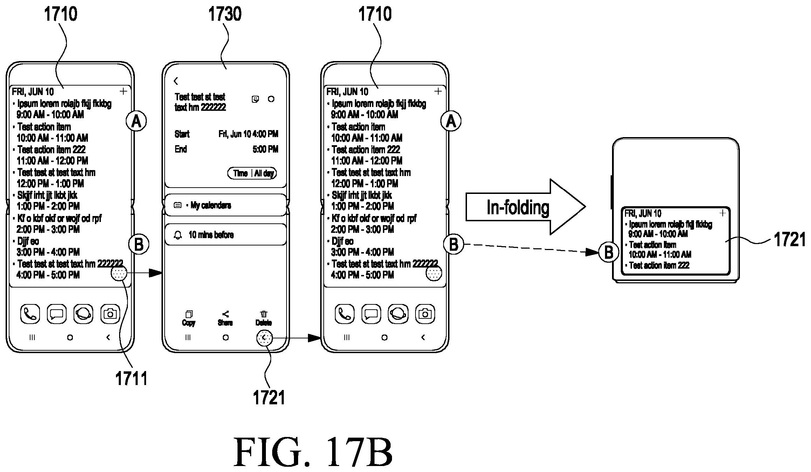

FIG. 17B is a view illustrating an operation of displaying an area where a user input is received, of a first UI displayed on a first display of an electronic device, as a second UI corresponding to the first UI, on a second display according to an embodiment.

Referring to FIG. 17B, when a user input 1711 for selecting the lower portion B is received through the first UI 1710 disposed on the first display, the electronic device may display an application execution screen 1730 related to the selected portion.

According to an embodiment, when the application execution screen 1730 is displayed or a user input 1721 (e.g., a back key) for displaying the first UI 1710 is received after editing is performed through the application execution screen 1730, the electronic device may display the first UI 1710.

According to an embodiment, when the second display is activated through in-folding within a set time after displaying the first UI 1710, the second UI 1721 corresponding to the lower portion B in which the user input is received of the upper portion A and the lower portion B of the first UI 1710 may be displayed on the second display. For example, the electronic device may display the second UI 1721 on the second display based on the scroll position, the cursor position, and/or whether the keyboard screen is displayed on the first UI 1710.

As such, as the second UI is generated by reflecting the use state in the first UI, the continuity of the sense of use may be provided to the user.

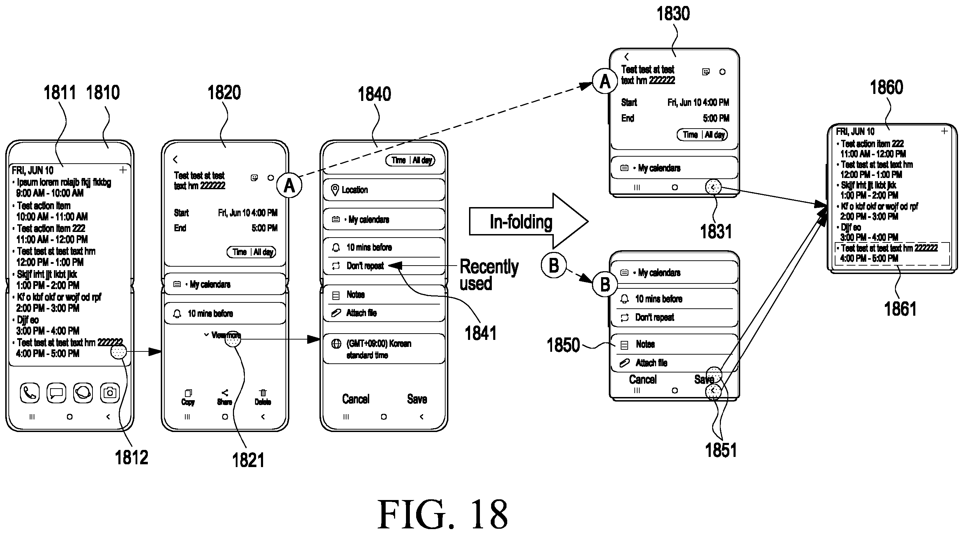

FIG. 18 is a view illustrating a second UI displayed on a second display that varies as a user input is received through a first UI displayed on a first display of an electronic device according to an embodiment.

Referring to FIG. 18, an electronic device (e.g., the electronic device 101 of FIG. 1, the processor 120 of FIG. 1, the electronic device 101 of FIG. 2, the electronic device 400 of FIG. 4A, the electronic device 101 of FIG. 5A, or the electronic device 101 of FIG. 5B), upon receiving a user input 1812 for selecting content included in the first UI 1811 through the first UI 1811 disposed on the home screen 1810 of the first display (e.g., the display module 160 of FIG. 1, the display 200 of FIG. 2, the display 430 of FIG. 4A, the rear display 439 of FIG. 4A, the rear display 439 of FIG. 4B, the display 503 of FIG. 5A, or the display 503 of FIG. 5B), may include the application execution screen including the selected content.

According to an embodiment, when the second display (e.g., the display module 160 of FIG. 1, the display 200 of FIG. 2, the display 430 of FIG. 4A, the rear display 439 of FIG. 4A, the rear display 439 of FIG. 4B, the display 503 of FIG. 5A, or the display 503 of FIG. 5B) is activated by in-folding of the electronic device in a state in which the execution screen 1820 of the application is displayed, the electronic device may display the application execution screen 1830 including only the upper portion A of the application execution screen 1820 on the second display.

According to an embodiment, when a user input 1831 for displaying the home screen of the second display is received through the application execution screen 1830 displayed on the second display, the electronic device may display the second UI 1860 corresponding to the application on the home screen of the second display. According to an embodiment, the electronic device may provide a visual effect 1861 of displaying a portion corresponding to the content selected in the first UI 1811 on the second UI 1860.

According to an embodiment, when a user input 1821 for controlling the application is received on the application execution screen 1820, the electronic device may include an application execution screen 1840 including information corresponding to the user input 1821.

According to an embodiment, when the second display is activated through in-folding within a set time after receiving a user input 1821 for controlling the application through the application execution screen 1840, the electronic device may display an application execution screen 1850 including the area where the user input 1821 is received on the application execution screen 1840, on the second display.

According to an embodiment, when a user input 1851 for displaying the home screen of the second display is received through the application execution screen 1850 displayed on the second display, the electronic device may display the second UI 1860 corresponding to the application on the home screen of the second display. According to an embodiment, the electronic device may provide a visual effect 1861 of displaying a portion corresponding to the content selected in the first UI 1811 on the second UI 1860.

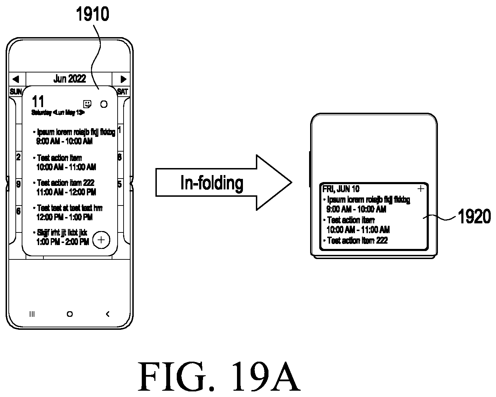

FIG. 19A is a view illustrating an operation when a second display is activated in a state in which an execution screen of a function capable of generating a widget is displayed through a first display of an electronic device according to an embodiment.

Referring to FIG. 19A, an electronic device (e.g., the electronic device 101 of FIG. 1, the processor 120 of FIG. 1, the electronic device 101 of FIG. 2, the electronic device 400 of FIG. 4A, the electronic device 101 of FIG. 5A, or the electronic device 101 of FIG. 5B) may identify whether an application execution screen 1910 may be displayed on the second display based on activation of the second display (e.g., the display module 160 of FIG. 1, the display 200 of FIG. 2, the display 430 of FIG. 4A, the rear display 439 of FIG. 4A, the rear display 439 of FIG. 4B, the display 503 of FIG. 5A, and the display 503 of FIG. 5B) through in-folding within a set time after receiving a user input through an application execution screen 1910 (e.g., calendar application) providable as a widget through the first display (e.g., the display module 160 of FIG. 1, the display 200 of FIG. 2, the display 430 of FIG. 4A, the rear display 439 of FIG. 4A, the rear display 439 of FIG. 4B, the display 503 of FIG. 5A, or the display 503 of FIG. 5B).

According to an embodiment, the electronic device may identify whether the application execution screen 1910 may be displayed on the second display based on the size of the application execution screen 1910, the horizontal/vertical ratio of the application execution screen 1910, the size of the second display, and/or the horizontal/vertical ratio of the second display.

According to an embodiment, when the electronic device determines that the application execution screen 1910 may not be displayed on the second display, the electronic device may display the widget 1920 corresponding to the application execution screen 1910 on the second display. According to an embodiment, the widget 1920 may include a visual effect indicating that the widget 1920 is generated to correspond to the execution screen 1910 of the application and is temporarily displayed.

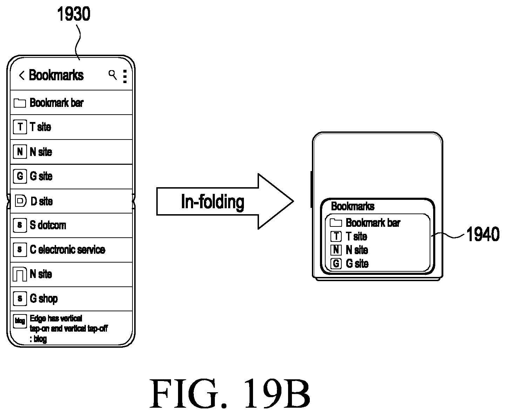

FIG. 19B is a view illustrating an operation when a second display is activated in a state in which an execution screen of a function capable of generating a widget is displayed through a first display of an electronic device according to an embodiment.

Referring to FIG. 19B, when the electronic device determines that the application execution screen 1930 may not be displayed on the second display based on activation of the second display through in-folding within a set time after a user input is received through the application execution screen 1930 (e.g., a bookmark application) that may be provided as a widget through the first display, the electronic device may display the widget 1940 corresponding to the application execution screen 1930 on the second display. According to an embodiment, the widget 1930 may include a visual effect indicating that the widget 1920 is generated to correspond to the execution screen 1940 of the application and is temporarily displayed. According to an embodiment, the operation of determining whether the electronic device may display the application execution screen 1940 on the second display is the same as that of FIG. 19A, and thus a redundant description thereof will be omitted.

FIG. 20 is a view illustrating an operation of displaying a message for leading to installation of a second UI when the second UI is generated and displayed a set number of times or more in a state in which the second UI is not disposed on a second display of an electronic device according to an embodiment.

Referring to FIG. 20, an electronic device (e.g., the electronic device 101 of FIG. 1, the processor 120 of FIG. 1, the electronic device 101 of FIG. 2, the electronic device 400 of FIG. 4A, the electronic device 101 of FIG. 5A, or the electronic device 101 of FIG. 5B) may display a message 2010 to induce the second UI to be installed on the second display when generating and displaying, a set number of times or more, the second UI corresponding to the first UI disposed on the first display (e.g., the display module 160 of FIG. 1, the display 200 of FIG. 2, the display 430 of FIG. 4A, the rear display 439 of FIG. 4A, the rear display 439 of FIG. 4B, the display 503 of FIG. 5A, and the display 503 of FIG. 5B), on the second display (e.g., the display module 160 of FIG. 1, the display 200 of FIG. 2, the display 430 of FIG. 4A, the rear display 439 of FIG. 4A, the rear display 439 of FIG. 4B, the display 503 of FIG. 5A, or the display 503 of FIG. 5B).

According to an embodiment, even if the second UI is not displayed on the second display a set number of times or more, the electronic device may install the second UI on the second display through a set user input (e.g., gesture or menu selection) after displaying the second UI.

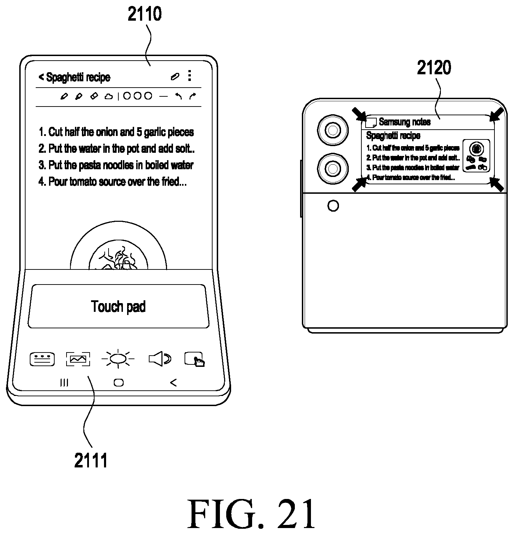

FIG. 21 is a view illustrating an operation of displaying a second UI corresponding to a first UI on a second display when the second display is activated while the first UI displayed through a portion of a first display of an electronic device is used, according to an embodiment.

Referring to FIG. 21, an electronic device (e.g., the electronic device 101 of FIG. 1, the processor 120 of FIG. 1, the electronic device 101 of FIG. 2, the electronic device 400 of FIG. 4A, the electronic device 101 of FIG. 5A, or the electronic device 101 of FIG. 5B) may display a content screen 2110 resized to fit the size of an upper area in the upper area of the first display with respect to the hinge and display at least one control UI 2111 (e.g., an icon and/or touch pad UI) for controlling the content screen in a lower area of the second display when the first display (e.g., the display module 160 of FIG. 1, the display 200 of FIG. 2, the display 430 of FIG. 4A, the rear display 439 of FIG. 4A, the rear display 439 of FIG. 4B, the display 503 of FIG. 5A, or the display 503 of FIG. 5B) is folded at an angle within a set range (e.g., flex mode).

According to an embodiment, when the second display is activated through in-folding within a set time after the user input is received while the first display is folded at an angle in a set range, the electronic device may resize the screen 2120 corresponding to the resized content screen 2110 to fit the size of the second display and display the resized content screen 2120 on the second display.

As such, even when the electronic device is in-folded after being used in a state of being folded at an angle in a set range, the user may have continuity of the sense of use.

According to an embodiment, an electronic device may comprise at least one housing, at least one sensor, a memory, a first display visually exposed through a first portion of the at least one housing, a second display visually exposed through a second portion of the housing opposite to the first portion of the at least one housing, and at least one processor operatively connected to the at least one sensor, the memory, the first display and the second display.

According to an embodiment, the at least one processor may, based on activation of the second display within a preset time after receiving a user input through a first user interface (UI) capable of executing at least one function of an application, displayed on the first display, identify whether a second UI capable of executing at least one function of the application is disposed on the second display.

According to an embodiment, the at least one processor may display the second UI on the second display based on the second UI being disposed.

According to an embodiment, the at least one processor may generate the second UI corresponding to the first UI based on a size of the second display based on the second UI being not disposed.

According to an embodiment, the at least one processor may display the second UI on the second display.

According to an embodiment, at least one of the first UI or the second UI may be a widget displayed on a home screen of the first display or a home screen of the second display.

According to an embodiment, the at least one processor may identify a widget most similar in size to the second display among a plurality of widgets related to the application based on the second UI being not disposed.

According to an embodiment, the at least one processor may generate the second UI based on the identified widget.

According to an embodiment, the at least one processor may identify a displayable area of the second display based on the second UI being not disposed.

According to an embodiment, the at least one processor may identify a widget most similar in size to the widget displayable area among a plurality of widgets related to the application.

According to an embodiment, the at least one processor may generate the second UI based on the identified widget.

According to an embodiment, the at least one processor may identify a displayable area of the second display based on the second UI being not disposed.

According to an embodiment, the at least one processor may display, on the second display, the second UI generated based on the size of the second display, as a popup screen, based on the size of the first UI being larger than the displayable area.

According to an embodiment, the at least one processor may delete the second UI based on a user input being not received for a preset time after the second UI is displayed on the second display, based on the second UI being not disposed.

According to an embodiment, the at least one processor may delete the second UI when the first display is activated after the second UI is displayed on the second display, based on the second UI being not disposed.

According to an embodiment, the generated second UI may include a visual effect indicating that the second UI is generated to correspond to the first UI.

According to an embodiment, the at least one processor may generate the second UI based on a design, transparency, color, and/or font size of the first UI, based on the second UI being not disposed.

According to an embodiment, the at least one processor may generate the second UI based on a scroll position, a cursor position, and/or whether a keyboard screen is displayed on the first UI during the set time before the second display is activated, based on the second UI being not disposed.

According to an embodiment, the at least one processor may display a page where the second UI is disposed among a plurality of pages of the home screen of the second display when the second UI is disposed.

According to an embodiment, the at least one processor may display a fourth UI corresponding to a third UI, along with the second UI, on the second display based on receiving a user input through the third UI displayed on the first display during the set time before the second display is activated.

According to an embodiment, the at least one processor may identify a recently used UI of the first UI and the third UI based on a sum of a size of the second UI and a size of the fourth UI being larger than the size of the second display.

According to an embodiment, the at least one processor may overlay and display, on the second display, the second UI and the fourth UI so that a UI corresponding to the identified recently used UI of the second UI and the fourth UI is disposed at a top.

According to an embodiment, the at least one processor may display a lower UI on the second display by moving an uppermost UI out of the second display or disposing the uppermost UI thereunder, based on receiving a user input for displaying the lower UI through the uppermost UI.

According to an embodiment, the at least one processor may display a message inducing the second UI to be disposed on the second display, on the second display, based on performing, a set number of times or more, an operation of generating the second UI and displaying the generated second UI on the second display, based on the second UI being not disposed.

According to an embodiment, a method for controlling an electronic device may comprise based on activation of a second display within a preset time after receiving a user input through a first user interface (UI) capable of executing at least one function of an application, displayed on a first display visually exposed through a first portion of at least one housing, identifying whether a second UI capable of executing at least one function of the application is disposed on a second display visually exposed through the second portion of the at least one housing, opposite to a first portion of the at least one housing.

According to an embodiment, the method for controlling the electronic device may comprise displaying the second UI on the second display.

According to an embodiment, the displaying the second UI comprising may comprise displaying the second UI on the second display based on the second UI being disposed.

According to an embodiment, the displaying the second UI comprising may comprise generating the second UI corresponding to the first UI based on a size of the second display, based on the second UI being not disposed.

According to an embodiment, at least one of the first UI or the second UI may be a widget displayed on a home screen of the first display or a home screen of the second display.

According to an embodiment, generating the second UI based on the size of the second display and displaying the second UI on the second display may include identifying a widget most similar in size to the second display among a plurality of widgets related to the application based on the second UI being not disposed.

According to an embodiment, generating the second UI based on the size of the second display and displaying the second UI on the second display may include generating the second UI based on the identified widget.

According to an embodiment, generating the second UI based on the size of the second display and displaying the second UI on the second display may include identifying a displayable area of the second display based on the second UI being not disposed.

According to an embodiment, generating the second UI based on the size of the second display and displaying the second UI on the second display may include identifying a widget most similar in size to the widget displayable area among a plurality of widgets related to the application.

According to an embodiment, generating the second UI based on the size of the second display and displaying the second UI on the second display may include generating the second UI based on the identified widget.

According to an embodiment, generating the second UI based on the size of the second display and displaying the second UI on the second display may include identifying a displayable area of the second display based on the second UI being not disposed.

According to an embodiment, generating the second UI based on the size of the second display and displaying the second UI on the second display may include displaying, on the second display, the second UI generated based on the size of the second display, as a popup screen, based on the size of the first UI being larger than the displayable area.

According to an embodiment, in a non-transitory computer-readable recording medium storing one or more programs, the one or more programs may comprise instructions that enable an electronic device to, based on activation of the second display within a preset time after receiving a user input through a first user interface (UI) capable of executing at least one function of an application, displayed on a first display visually exposed through a first portion of at least one housing, identify whether a second UI capable of executing at least one function of an application is disposed on a second display visually exposed through a second portion of the at least one housing opposite to the first portion of the at least one housing.

According to an embodiment, the one or more programs may comprise instructions that enable the electronic device to display the second UI on the second display based on the second UI being disposed.

According to an embodiment, the one or more programs may comprise instructions that enable the electronic device to generate the second UI corresponding to the first UI based on a size of the second display based on the second UI being not disposed.

According to an embodiment, the one or more programs may comprise instructions that enable the electronic device to display the second UI on the second display.

According to an embodiment, at least one of the first UI or the second UI may be a widget displayed on a home screen of the first display or a home screen of the second display.

According to an embodiment, the one or more programs may comprise instructions that enable the electronic device to identify a widget most similar in size to the second display among a plurality of widgets related to the application based on the second UI being not disposed.

According to an embodiment, the one or more programs may comprise instructions that enable the electronic device to generate the second UI based on the identified widget.

According to an embodiment, the one or more programs may comprise instructions that enable the electronic device to identify a displayable area of the second display based on the second UI being not disposed.

According to an embodiment, the one or more programs may comprise instructions that enable the electronic device to identify a widget most similar in size to the widget displayable area among a plurality of widgets related to the application.

According to an embodiment, the one or more programs may comprise instructions that enable the electronic device to generate the second UI based on the identified widget.

According to an embodiment, the one or more programs may comprise instructions that enable the electronic device to identify a displayable area of the second display based on the second UI being not disposed.

According to an embodiment, the one or more programs may comprise instructions that enable the electronic device to display, on the second display, the second UI generated based on the size of the second display, as a popup screen, based on the size of the first UI being larger than the displayable area.

According to an embodiment, the one or more programs may comprise instructions that enable the electronic device to delete the second UI based on a user input being not received for a preset time after the second UI is displayed on the second display, based on the second UI being not disposed.

According to an embodiment, the one or more programs may comprise instructions that enable the electronic device to delete the second UI when the first display is activated after the second UI is displayed on the second display, based on the second UI being not disposed.

According to an embodiment, the generated second UI may include a visual effect indicating that the second UI is generated to correspond to the first UI.

According to an embodiment, the one or more programs may comprise instructions that enable the electronic device to generate the second UI based on a design, transparency, color, and/or font size of the first UI, based on the second UI being not disposed.

According to an embodiment, the one or more programs may comprise instructions that enable the electronic device to generate the second UI based on a scroll position, a cursor position, and/or whether a keyboard screen is displayed on the first UI during the set time before the second display is activated, based on the second UI being not disposed.

According to an embodiment, the one or more programs may comprise instructions that enable the electronic device to display a page where the second UI is disposed among a plurality of pages of the home screen of the second display when the second UI is disposed.

According to an embodiment, the one or more programs may comprise instructions that enable the electronic device to display a fourth UI corresponding to a third UI, along with the second UI, on the second display based on receiving a user input through the third UI displayed on the first display during the set time before the second display is activated.

According to an embodiment, the one or more programs may comprise instructions that enable the electronic device to identify a recently used UI of the first UI and the third UI based on a sum of a size of the second UI and a size of the fourth UI being larger than the size of the second display.

According to an embodiment, the one or more programs may comprise instructions that enable the electronic device to overlay and display, on the second display, the second UI and the fourth UI so that a UI corresponding to the identified recently used UI of the second UI and the fourth UI is disposed at a top.

According to an embodiment, the one or more programs may comprise instructions that enable the electronic device to display a lower UI on the second display by moving an uppermost UI out of the second display or disposing the uppermost UI thereunder, based on receiving a user input for displaying the lower UI through the uppermost UI.

According to an embodiment, the one or more programs may comprise instructions that enable the electronic device to display a message inducing the second UI to be disposed on the second display, on the second display, based on performing, a set number of times or more, an operation of generating the second UI and displaying the generated second UI on the second display, based on the second UI being not disposed.

The electronic device according to an embodiment may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

An embodiment of the disclosure may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to an embodiment, each component (e.g., a module or a program) of the above-described components may include a single entity or multiple entities. Some of the plurality of entities may be separately disposed in different components. According to an embodiment, one or more of the above-described components may be omitted, or one or more other components may be added. Alternatively or Further, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101, 300, 400) comprising:
a flexible display (160, 200, 430, 503);
a cover display (380, 390, 440, 450, 511, 521);
a processor (121); and
a memory (130) storing instructions that, when executed by the processor, cause the electronic device to:
display, via the flexible display, a first home screen associated with the flexible display, wherein the first home screen is configured to display a first user interface (UI) capable of executing at least one function of an application,
receive a user input through the first UI displayed via the flexible display,
after receiving the user input, activate the cover display,
based on activation of the cover display within a preset time after receiving the user input through the first user interface (UI), identify whether a second home screen associated with the cover display is configured to display a second UI capable of executing at least one function of the application (710);
based on the second home screen associated with the cover display being configured to display the second UI, display the second UI on the second home screen associated with the cover display (720); and
based on the second home screen associated with the cover display configured not to display the second UI, obtain the second UI corresponding to the first UI based on a size of the cover display, and display the obtained second UI on the cover display (730).

2. The electronic device of claim 2, wherein the first UI is a widget displayed on the first home screen of the flexible display, and the second UI is a widget displayed on the second home screen of the cover display.

3. The electronic device of claim 2, wherein the instructions are configured to:
cover display among a plurality of widgets related to the application based on the second home screen associated with the cover display not configured to display the second UI; and
obtain the second UI based on the identified widget.

4. The electronic device of claim 2 or 3, wherein the instructions are configured to:
identify a displayable area of the cover display based on the second home screen associated with the cover display not configured to display the second UI;
identify a widget most similar in size to the widget displayable area among a plurality of widgets related to the application; and
obtain the second UI based on the identified widget.

5. The electronic device of any one of claims 1 to 4, wherein the instructions are configured to:
identify a displayable area of the cover display based on the second home screen associated with the cover display not configured to display the second UI; and
based on the size of the first UI being larger than the displayable area, display, on the cover display, the second UI obtained based on the size of the cover display, as a popup screen.

6. The electronic device of any one of claims 1 to 5, wherein the instructions are configured to delete the second UI based on a user input being not received for a preset time after the second UI is displayed on the cover display, based on the second home screen associated with the cover display not configured to display the second UI.

7. The electronic device of any one of claims 1 to 6, wherein the instructions are configured to delete the second UI when the flexible display is activated after the second UI is displayed on the cover display, based on the second home screen associated with the cover display not configured to display the second UI.

8. The electronic device of any one of claims 1 to 7, wherein the obtained second UI includes a visual effect indicating that the second UI is obtained to correspond to the first UI.

9. The electronic device of any one of claims 1 to 8, wherein the instructions are configured to obtain the second UI based on a design, transparency, color, and/or font size of the first UI, based on the second home screen associated with the cover display not configured to display the second UI

10. The electronic device of any one of claims 1 to 9, wherein the instructions are configured to obtain the second UI based on a scroll position, a cursor position, and/or whether a keyboard screen is displayed on the first UI during the preset time before the cover display is activated, based on the second home screen associated with the cover display not configured to display the second UI.

11. The electronic device of any one of claims 1 to 10, wherein the instructions are is configured to display a page where the second UI is disposed among a plurality of pages of the second home screen of the cover display based on the second home screen associated with the cover display configured to display the second UI.

12. The electronic device of any one of claims 1 to 11, wherein the instructions are configured to display a fourth UI corresponding to a third UI, along with the second UI, on the cover display based on receiving a user input through the third UI displayed on the flexible display during the set time before the cover display is activated.

13. The electronic device of any one of claims 1 to 12, wherein the instructions are configured to display a message inducing the second UI to be disposed on the second home screen, on the cover display, based on performing, a set number of times or more, an operation of obtaining the second UI and displaying the obtained second UI on the cover display, based on the second home screen associated with the cover display not configured to display the second UI.

14. A method for controlling an electronic device, the method comprising:
displaying, via a flexible display, a first home screen associated with the flexible display, wherein the first home screen is configured to display a first user interface (UI) capable of executing at least one function of an application,
receiving a user input through the first UI displayed via the flexible display,
after receiving the user input, activating a cover display,
based on activation of the cover display within a preset time after receiving the user input through the first user interface (UI), identifying whether a second home screen associated with the cover display is configured to display a second UI capable of executing at least one function of the application (710); and
displaying the second UI on the cover display,
wherein the displaying of the second UI comprises:
based on the second home screen associated with the cover display being configured to display the second UI, displaying the second UI on the second home screen associated with the cover display (720); and
based on the second home screen associated with the cover display being configured not to display the second UI, obtaining the second UI corresponding to the first UI based on a size of the cover display and displaying the obtained second UI on the cover display (730).

15. A non-transitory computer-readable recording medium storing one or more programs, the one or more programs comprising instructions that enable an electronic device to:
display, via a flexible display, a first home screen associated with the flexible display, wherein the first home screen is configured to display a first user interface (UI) capable of executing at least one function of an application;
receive a user input through the first UI displayed via the flexible display;
after receiving the user input, activate a cover display;
based on activation of the cover display within a preset time after receiving the user input through the first user interface (UI), identify whether a second home screen associated with the cover display is configured to display a second UI capable of executing at least one function of the application (710);
based on the second home screen associated with the cover display being configured to display the second UI, display the second UI on the second home screen associated with the cover display (720); and
based on the second home screen associated with the cover display being configured not to display the second UI, obtain the second UI corresponding to the first UI based on a size of the cover display, and display the obtained second UI on the cover display (730).

## Patentansprüche

1. Elektronische Vorrichtung (101, 300, 400), umfassend:
eine flexible Anzeige (160, 200, 430, 503);
eine Abdeckungsanzeige (380, 390, 440, 450, 511, 521);
einen Prozessor (121); und
einen Speicher (130), der Anweisungen speichert, die, wenn sie durch den Prozessor ausgeführt werden, die elektronische Vorrichtung zu Folgendem veranlassen:
Anzeigen eines ersten Startbildschirms, der der flexiblen Anzeige zugeordnet ist, über die flexible Anzeige, wobei der erste Startbildschirm dazu konfiguriert ist, eine erste Benutzerschnittstelle (UI) anzuzeigen, die in der Lage ist, mindestens eine Funktion einer Anwendung auszuführen,
Empfangen einer Benutzereingabe durch die erste UI, die mittels der flexiblen Anzeige angezeigt wird,
nach Empfangen der Benutzereingabe Aktivieren der Abdeckungsanzeige,
basierend auf einer Aktivierung der Abdeckungsanzeige innerhalb einer voreingestellten Zeit nach dem Empfangen der Benutzereingabe über die erste Benutzerschnittstelle (UI), Identifizieren, ob ein zweiter Startbildschirm, der der Abdeckungsanzeige zugeordnet ist, dazu konfiguriert ist, eine zweite UI anzuzeigen, die in der Lage ist, mindestens eine Funktion der Anwendung (710) auszuführen;
basierend darauf, dass der zweite Startbildschirm, der der Abdeckungsanzeige zugeordnet ist, dazu konfiguriert ist, die zweite Benutzerschnittstelle anzuzeigen, Anzeigen der zweiten Benutzerschnittstelle auf dem zweiten Startbildschirm, der der Abdeckungsanzeige (720) zugeordnet ist; und
basierend darauf, dass der zweite Startbildschirm, der der Abdeckungsanzeige zugeordnet ist, dazu konfiguriert ist, die zweite UI nicht anzuzeigen, Erhalten der zweiten UI, die der ersten UI entspricht, basierend auf einer Größe der Abdeckungsanzeige und Anzeigen der erhaltenen zweiten UI auf der Abdeckungsanzeige (730).

2. Elektronische Vorrichtung nach Anspruch 2, wobei die erste UI ein Widget ist, das auf dem ersten Startbildschirm der flexiblen Anzeige angezeigt wird, und die zweite UI ein Widget ist, das auf dem zweiten Startbildschirm der Abdeckungsanzeige angezeigt wird.

3. Elektronische Vorrichtung nach Anspruch 2, wobei die Anweisungen zu Folgendem konfiguriert sind:
Anzeigen auf der Abdeckung aus einer Vielzahl von Widgets, die sich auf die Anwendung beziehen, basierend darauf, dass der zweite Startbildschirm, der der Abdeckungsanzeige zugeordnet ist, nicht dazu konfiguriert ist, die zweite UI anzuzeigen; und
Erhalten der zweiten UI basierend auf dem identifizierten Widget.

4. Elektronische Vorrichtung nach Anspruch 2 oder 3, wobei die Anweisungen zu Folgendem konfiguriert sind:
Identifizieren eines anzeigbaren Bereichs der Abdeckungsanzeige basierend darauf, dass der zweite Startbildschirm, der der Abdeckungsanzeige zugeordnet ist, nicht dazu konfiguriert ist, die zweite UI anzuzeigen;
Identifizieren eines Widgets, das der Größe nach dem ein Widget anzeigbaren Bereich am ähnlichsten ist, aus einer Vielzahl von Widgets, die sich auf die Anwendung beziehen; und
Erhalten der zweiten UI basierend auf dem identifizierten Widget.

5. Elektronische Vorrichtung nach einem der Ansprüche 1 bis 4, wobei die Anweisungen zu Folgendem konfiguriert sind:
Identifizieren eines anzeigbaren Bereichs der Abdeckungsanzeige basierend darauf, dass der zweite Startbildschirm, der der Abdeckungsanzeige zugeordnet ist, nicht dazu konfiguriert ist, die zweite UI anzuzeigen; und
basierend darauf, dass die Größe der ersten UI größer als der anzeigbare Bereich ist, Anzeigen, auf der Abdeckungsanzeige, der zweiten UI, die basierend auf der Größe der Abdeckungsanzeige erhalten wird, als einen Popup-Bildschirm.

6. Elektronische Vorrichtung nach einem der Ansprüche 1 bis 5, wobei die Anweisungen dazu konfiguriert sind, die zweite UI basierend darauf zu löschen, dass keine Benutzereingabe über eine voreingestellte Zeit, nachdem die zweite UI auf der Abdeckungsanzeige angezeigt wird, empfangen wird, basierend darauf, dass der zweite Startbildschirm, der der Abdeckungsanzeige zugeordnet ist, nicht dazu konfiguriert ist, die zweite UI anzuzeigen.

7. Elektronische Vorrichtung nach einem der Ansprüche 1 bis 6, wobei die Anweisungen dazu konfiguriert sind, die zweite UI zu löschen, wenn die flexible Anzeige aktiviert wird, nachdem die zweite UI auf der Abdeckungsanzeige angezeigt wird, basierend darauf, dass der zweite Startbildschirm, der der Abdeckungsanzeige zugeordnet ist, nicht dazu konfiguriert ist, die zweite UI anzuzeigen.

8. Elektronische Vorrichtung nach einem der Ansprüche 1 bis 7, wobei die erhaltene zweite UI einen visuellen Effekt enthält, der angibt, dass die zweite UI so erhalten wird, dass sie der ersten UI entspricht.

9. Elektronische Vorrichtung nach einem der Ansprüche 1 bis 8, wobei die Anweisungen dazu konfiguriert sind, die zweite UI basierend auf einem Design, einer Transparenz, einer Farbe und/oder einer Schriftgröße der ersten UI zu erhalten, basierend darauf, dass der zweite Startbildschirm, der der Abdeckungsanzeige zugeordnet ist, nicht dazu konfiguriert ist, die zweite UI anzuzeigen.

10. Elektronische Vorrichtung nach einem der Ansprüche 1 bis 9, wobei die Anweisungen dazu konfiguriert sind, die zweite UI basierend auf einer Scroll-Position, einer Cursor-Position und/oder darauf zu erhalten, ob ein Tastaturbildschirm während der voreingestellten Zeit, bevor die Abdeckungsanzeige aktiviert wird, auf der ersten UI angezeigt wird, basierend darauf, dass der zweite Startbildschirm, der der Abdeckungsanzeige zugeordnet ist, nicht dazu konfiguriert ist, die zweite UI anzuzeigen.

11. Elektronische Vorrichtung nach einem der Ansprüche 1 bis 10, wobei die Anweisungen dazu konfiguriert sind ist, eine Seite, auf der die zweite UI angeordnet ist, unter einer Vielzahl von Seiten des zweiten Startbildschirms der Abdeckungsanzeige anzuzeigen, basierend darauf, dass der zweite Startbildschirm, der der Abdeckungsanzeige zugeordnet ist, dazu konfiguriert ist, die zweite UI anzuzeigen.

12. Elektronische Vorrichtung nach einem der Ansprüche 1 bis 11, wobei die Anweisungen dazu konfiguriert sind, eine vierte UI, die einer dritten UI entspricht, zusammen mit der zweiten UI auf der Abdeckungsanzeige anzuzeigen, basierend darauf, dass eine Benutzereingabe über die dritte UI, die auf der flexiblen Anzeige angezeigt wird, während der eingestellten Zeit, bevor die Abdeckungsanzeige aktiviert wird, empfangen wird.

13. Elektronische Vorrichtung nach einem der Ansprüche 1 bis 12, wobei die Anweisungen dazu konfiguriert sind, eine Nachricht, die bewirkt, dass die zweite UI auf dem zweiten Startbildschirm angeordnet wird, auf der Abdeckungsanzeige anzuzeigen, basierend darauf, dass eine eingestellte Anzahl von Malen oder mehr ein Vorgang eines Erhaltens der zweiten UI und eines Anzeigens der erhaltenen zweiten UI auf der Abdeckungsanzeige durchgeführt wird, basierend darauf, dass der zweite Startbildschirm, der der Abdeckungsanzeige zugeordnet ist, nicht dazu konfiguriert ist, die zweite UI anzuzeigen.

14. Verfahren zum Steuern einer elektronischen Vorrichtung, wobei das Verfahren Folgendes umfasst:
Anzeigen eines ersten Startbildschirms, der der flexiblen Anzeige zugeordnet ist, über eine flexible Anzeige, wobei der erste Startbildschirm dazu konfiguriert ist, eine erste Benutzerschnittstelle (UI) anzuzeigen, die in der Lage ist, mindestens eine Funktion einer Anwendung auszuführen,
Empfangen einer Benutzereingabe durch die erste UI, die mittels der flexiblen Anzeige angezeigt wird,
nach Empfangen der Benutzereingabe Aktivieren einer Abdeckungsanzeige,
basierend auf einer Aktivierung der Abdeckungsanzeige innerhalb einer voreingestellten Zeit nach dem Empfangen der Benutzereingabe über die erste Benutzerschnittstelle (UI), Identifizieren, ob ein zweiter Startbildschirm, der der Abdeckungsanzeige zugeordnet ist, dazu konfiguriert ist, eine zweite UI anzuzeigen, die in der Lage ist, mindestens eine Funktion der Anwendung (710) auszuführen; und
Anzeigen der zweiten UI auf der Abdeckungsanzeige,
wobei das Anzeigen der zweiten UI Folgendes umfasst:
basierend darauf, dass der zweite Startbildschirm, der der Abdeckungsanzeige zugeordnet ist, dazu konfiguriert ist, die zweite Benutzerschnittstelle anzuzeigen, Anzeigen der zweiten Benutzerschnittstelle auf dem zweiten Startbildschirm, der der Abdeckungsanzeige (720) zugeordnet ist; und
basierend darauf, dass der zweite Startbildschirm, der der Abdeckungsanzeige zugeordnet ist, dazu konfiguriert ist, die zweite UI nicht anzuzeigen, Erhalten der zweiten UI, die der ersten UI entspricht, basierend auf einer Größe der Abdeckungsanzeige und Anzeigen der erhaltenen zweiten UI auf der Abdeckungsanzeige (730).

15. Nicht flüchtiges computerlesbares Aufzeichnungsmedium, das ein oder mehrere Programme speichert, wobei das eine oder die mehreren Programme Anweisungen umfassen, die eine elektronische Vorrichtung zu Folgendem befähigen:
Anzeigen eines ersten Startbildschirms, der der flexiblen Anzeige zugeordnet ist, über eine flexible Anzeige, wobei der erste Startbildschirm dazu konfiguriert ist, eine erste Benutzerschnittstelle (UI) anzuzeigen, die in der Lage ist, mindestens eine Funktion einer Anwendung auszuführen;
Empfangen einer Benutzereingabe durch die erste UI, die mittels der flexiblen Anzeige angezeigt wird;
nach Empfangen der Benutzereingabe Aktivieren einer Abdeckungsanzeige;
basierend auf einer Aktivierung der Abdeckungsanzeige innerhalb einer voreingestellten Zeit nach dem Empfangen der Benutzereingabe über die erste Benutzerschnittstelle (UI), Identifizieren, ob ein zweiter Startbildschirm, der der Abdeckungsanzeige zugeordnet ist, dazu konfiguriert ist, eine zweite UI anzuzeigen, die in der Lage ist, mindestens eine Funktion der Anwendung (710) auszuführen;
basierend darauf, dass der zweite Startbildschirm, der der Abdeckungsanzeige zugeordnet ist, dazu konfiguriert ist, die zweite UI anzuzeigen, Anzeigen der zweiten UI auf dem zweiten Startbildschirm, der der Abdeckungsanzeige (720) zugeordnet ist; und
basierend darauf, dass der zweite Startbildschirm, der der Abdeckungsanzeige zugeordnet ist, dazu konfiguriert ist, die zweite UI nicht anzuzeigen, Erhalten der zweiten UI, die der ersten UI entspricht, basierend auf einer Größe der Abdeckungsanzeige und Anzeigen der erhaltenen zweiten UI auf der Abdeckungsanzeige (730).

## Revendications

1. Dispositif électronique (101, 300, 400) comprenant :
un afficheur flexible (160, 200, 430, 503) ;
un afficheur de couverture (380, 390, 440, 450, 511, 521) ;
un processeur (121) ; et
une mémoire (130) stockant des instructions qui, lorsqu'elles sont exécutées par le processeur, amènent le dispositif électronique à :
afficher, par l'intermédiaire de l'afficheur flexible, un premier écran d'accueil associé à l'afficheur flexible, ledit premier écran d'accueil étant configuré pour afficher une première interface utilisateur (UI) capable d'exécuter au moins une fonction d'une application,
recevoir une entrée utilisateur par le biais de la première UI affichée par l'intermédiaire de l'afficheur flexible,
après la réception de l'entrée utilisateur, activer l'afficheur de couverture,
sur la base de l'activation de l'afficheur de couverture dans un délai prédéfini après la réception de l'entrée utilisateur par le biais de la première interface utilisateur (UI), identifier si un second écran d'accueil associé à l'afficheur de couverture est configuré pour afficher une deuxième UI capable d'exécuter au moins une fonction de l'application (710) ;
sur la base du second écran d'accueil associé à l'afficheur de couverture configuré pour afficher la deuxième UI, afficher la deuxième UI sur le second écran d'accueil associé à l'afficheur de couverture (720) ; et
sur la base du second écran d'accueil associé à l'afficheur de couverture configuré pour ne pas afficher la deuxième UI, obtenir la deuxième UI correspondant à la première UI sur la base d'une taille de l'afficheur de couverture, et afficher la deuxième UI obtenue sur l'afficheur de couverture (730).

2. Dispositif électronique de la revendication 2, dans lequel la première UI est un gadget affiché sur le premier écran d'accueil de l'afficheur flexible, et la deuxième UI est un gadget affiché sur le second écran d'accueil de l'afficheur de couverture.

3. Dispositif électronique de la revendication 2, dans lequel les instructions sont configurées pour :
afficheur de couverture parmi une pluralité de gadgets liés à l'application sur la base du second écran d'accueil associé à l'afficheur de couverture non configuré pour afficher la deuxième UI ; et
obtenir la deuxième UI sur la base du gadget identifié.

4. Dispositif électronique de l'une des revendications 2 ou 3, dans lequel les instructions sont configurées pour :
identifier une zone affichable de l'afficheur de couverture sur la base du second écran d'accueil associé à l'afficheur de couverture non configuré pour afficher la deuxième UI ;
identifier un gadget dont la taille est la plus proche de celle de la zone affichable de gadget parmi une pluralité de gadgets liés à l'application ; et
obtenir la deuxième UI sur la base du gadget identifié.

5. Dispositif électronique de l'une quelconque des revendications 1 à 4, dans lequel les instructions sont configurées pour :
identifier une zone affichable de l'afficheur de couverture sur la base du second écran d'accueil associé à l'afficheur de couverture non configuré pour afficher la deuxième UI ; et
sur la base du fait que la taille de la première UI est supérieure à celle de la zone affichable, afficher, sur l'afficheur de couverture, la deuxième UI obtenue sur la base de la taille de l'afficheur de couverture, en tant qu'écran contextuel.

6. Dispositif électronique de l'une quelconque des revendications 1 à 5, dans lequel les instructions sont configurées pour supprimer la deuxième UI sur la base du fait qu'une entrée utilisateur n'est pas reçue dans un délai prédéfini après l'affichage de la deuxième UI sur l'afficheur de couverture, sur la base du second écran d'accueil associé à l'afficheur de couverture non configuré pour afficher la deuxième UI.

7. Dispositif électronique de l'une quelconque des revendications 1 à 6, dans lequel les instructions sont configurées pour supprimer la deuxième UI lorsque l'afficheur flexible est activé après l'affichage de la deuxième UI sur l'afficheur de couverture, sur la base du second écran d'accueil associé à l'afficheur de couverture non configuré pour afficher la deuxième UI.

8. Dispositif électronique de l'une quelconque des revendications 1 à 7, dans lequel la deuxième UI obtenue comprend un effet visuel indiquant que la deuxième UI est obtenue pour correspondre à la première UI.

9. Dispositif électronique de l'une quelconque des revendications 1 à 8, dans lequel les instructions sont configurées pour obtenir la deuxième UI sur la base d'une conception, d'une transparence, d'une couleur et/ou d'une taille de police de la première UI, sur la base du second écran d'accueil associé à l'afficheur de couverture non configuré pour afficher la deuxième UI.

10. Dispositif électronique de l'une quelconque des revendications 1 à 9, dans lequel les instructions sont configurées pour obtenir la deuxième UI sur la base d'une position de défilement, d'une position de curseur, et/ou si un écran de clavier est affiché sur la première UI dans le délai prédéfini avant que l'afficheur de couverture ne soit activé, sur la base du second écran d'accueil associé à l'afficheur de couverture non configuré pour afficher la deuxième UI.

11. Dispositif électronique de l'une quelconque des revendications 1 à 10, dans lequel les instructions sont configurées pour afficher une page où la deuxième UI est disposée parmi une pluralité de pages du second écran d'accueil de l'afficheur de couverture sur la base du second écran d'accueil associé à l'afficheur de couverture configuré pour afficher la deuxième UI.

12. Dispositif électronique de l'une quelconque des revendications 1 à 11, dans lequel les instructions sont configurées est pour afficher une quatrième UI correspondant à une troisième UI, avec la deuxième UI, sur l'afficheur de couverture sur la base de la réception d'une entrée utilisateur par le biais de la troisième UI affichée sur l'afficheur flexible dans le délai prédéfini avant que l'afficheur de couverture ne soit activé.

13. Dispositif électronique de l'une quelconque des revendications 1 à 12, dans lequel les instructions sont configurées pour afficher un message incitant la deuxième UI à être disposée sur le second écran d'accueil, sur l'afficheur de couverture, sur la base de la réalisation, un nombre défini de fois ou plus, d'une opération d'obtention de la deuxième UI et d'affichage de la deuxième UI obtenue sur l'afficheur de couverture, sur la base du second écran d'accueil associé à l'afficheur de couverture non configuré pour afficher la deuxième UI.

14. Procédé permettant la commande d'un dispositif électronique, le procédé comprenant :
l'affichage, par l'intermédiaire d'un afficheur flexible, d'un premier écran d'accueil associé à l'afficheur flexible, ledit premier écran d'accueil étant configuré pour afficher une première interface utilisateur (UI) capable d'exécuter au moins une fonction d'une application,
la réception d'une entrée utilisateur par le biais de la première UI affichée par l'intermédiaire de l'afficheur flexible,
après la réception de l'entrée utilisateur, l'activation d'un afficheur de couverture,
sur la base de l'activation de l'afficheur de couverture dans un délai prédéfini après la réception de l'entrée utilisateur par le biais de la première interface utilisateur (UI), le fait d'identifier si un second écran d'accueil associé à l'afficheur de couverture est configuré pour afficher une deuxième UI capable d'exécuter au moins une fonction de l'application (710) ; et
l'affichage de la deuxième UI sur l'afficheur de couverture,
dans lequel l'affichage de la deuxième UI comprend :
sur la base du second écran d'accueil associé à l'afficheur de couverture configuré pour afficher la deuxième UI, l'affichage de la deuxième UI sur le second écran d'accueil associé à l'afficheur de couverture (720) ; et
sur la base du second écran d'accueil associé à l'afficheur de couverture configuré pour ne pas afficher la deuxième UI, l'obtention de la deuxième UI correspondant à la première UI sur la base d'une taille de l'afficheur de couverture et l'affichage de la deuxième UI obtenue sur l'afficheur de couverture (730).

15. Support d'enregistrement non transitoire lisible par ordinateur stockant un ou plusieurs programmes, le ou les programmes comprenant des instructions qui permettent à un dispositif électronique de :
afficher, par l'intermédiaire d'un afficheur flexible, un premier écran d'accueil associé à l'afficheur flexible, ledit premier écran d'accueil étant configuré pour afficher une première interface utilisateur (UI) capable d'exécuter au moins une fonction d'une application ;
recevoir une entrée utilisateur par le biais de la première UI affichée par l'intermédiaire de l'afficheur flexible ;
après la réception de l'entrée utilisateur, activer un afficheur de couverture ;
sur la base de l'activation de l'afficheur de couverture dans un délai prédéfini après la réception de l'entrée utilisateur par le biais de la première interface utilisateur (UI), identifier si un second écran d'accueil associé à l'afficheur de couverture est configuré pour afficher une deuxième UI capable d'exécuter au moins une fonction de l'application (710) ;
sur la base du second écran d'accueil associé à l'afficheur de couverture configuré pour afficher la deuxième UI, afficher la deuxième UI sur le second écran d'accueil associé à l'afficheur de couverture (720) ; et
sur la base du second écran d'accueil associé à l'afficheur de couverture configuré pour ne pas afficher la deuxième UI, obtenir la deuxième UI correspondant à la première UI sur la base d'une taille de l'afficheur de couverture, et afficher la deuxième UI obtenue sur l'afficheur de couverture (730).
